(19)

**Europäisches Patentamt**
**European Patent Office**
**Office européen des brevets**

(11) **EP 4 783 604 A1**

(12) **EUROPEAN PATENT APPLICATION**

(43) Date of publication:
    **29.07.2026 Bulletin 2026/31**

(21) Application number: **26152081.1**

(22) Date of filing: **15.01.2026**

(51) International Patent Classification (IPC):
    **H04N 25/773** (2023.01)

(52) Cooperative Patent Classification (CPC):
    **H04N 25/773**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH LA MA MD TN**

(30) Priority: **24.01.2025 JP 2025010847**

(71) Applicant: **Canon Kabushiki Kaisha
    Tokyo, 146-8501 (JP)**

(72) Inventor: **KAWAGUCHI, Osamu
    Ohta-ku, Tokyo, 146-8501 (JP)**

(74) Representative: **TBK
    Bavariaring 4-6
    80336 München (DE)**

(54) **PHOTOELECTRIC CONVERSION DEVICE**

(57)    A photoelectric conversion device (100) includes a plurality of avalanche photodiodes (201), a plurality of accumulating circuits (251), and an interpolation unit (401). A plurality of first accumulating circuits generate, based on output signals of a plurality of first avalanche photodiodes, a plurality of first pixel values by accumulating values weighted by a first weight that varies in a predetermined cycle. A plurality of second accumulating circuits generate, based on output signals of a plurality of second avalanche photodiodes, a plurality of second pixel values by accumulating values weighted by a second weight that has values different from the first weight and that varies in a predetermined cycle. The interpolation unit generates, by interpolation processing using a part of the plurality of first pixel values, a first interpolation pixel value at first representative coordinates of a first avalanche photodiode corresponding to a first pixel value used in the interpolation processing.

F I G. 7

EP 4 783 604 A1

## Description

TECHNICAL FIELD

The present disclosure relates to a photoelectric conversion device.

BACKGROUND

A time correlation image sensor is disclosed in "Shigeru Ando and Akira Kimachi: "Time-Domain Correlation Imaging and Its Applications', the transactions of the Institute of Electrical Engineers of Japan. A publication of Sensors and Micromachines Society, Volume 129, No. 5, pp. 129-137, May 1, 2009". Further, in "Time-Domain Correlation Imaging and Its Applications", an element structure including a pixel circuit capable of detecting a time correlation is disclosed.

SUMMARY

In a time correlation image sensor as described in "Time-Domain Correlation Imaging and Its Applications", high accuracy is required.
The present disclosure is directed to provide a photoelectric conversion device capable of acquiring a signal with higher accuracy.
The present disclosure in its first aspect provides a photoelectric conversion device as specified in claim 1. Optional features are specified in claims 2 to 15.
Features of the present disclosure will become apparent from the following description of embodiments with reference to the attached drawings. The following description of embodiments is described by way of example.

BRIEF DESCRIPTION OF THE DRAWINGS

Fig. 1 is a schematic diagram illustrating an overall configuration of a photoelectric conversion device according to a first embodiment.
Fig. 2 is a schematic block diagram illustrating a configuration example of a sensor substrate according to the first embodiment.
Fig. 3 is a schematic block diagram illustrating a configuration example of a circuit substrate according to the first embodiment.
Fig. 4 is a diagram illustrating a relationship between a main frame period and sub-frame periods and a temporal change in a weighting amount according to the first embodiment.
Fig. 5 is a schematic block diagram illustrating a configuration example of one pixel of a photoelectric conversion unit and a pixel signal processing unit according to the first embodiment.
Figs. 6A, 6B, and 6C are diagrams illustrating an operation of an avalanche photodiode according to the first embodiment.
Fig. 7 is a diagram illustrating a configuration of a pixel according to the first embodiment.
Fig. 8 is a timing chart illustrating a pixel driving method according to the first embodiment.
Figs. 9A, 9B, 9C, and 9D are diagrams illustrating a relationship between pixel values and coordinates of pixels according to the first embodiment.
Figs. 10A, 10B, 10C, and 10D are diagrams illustrating interpolation processing in an interpolation unit according to the first embodiment.
Figs. 11A, 11B, 11C, and 11D are diagrams illustrating selection processing in a selection unit according to the first embodiment.
Figs. 12A, 12B, and 12C are graphs illustrating examples of weighting amounts according to the first embodiment.
Figs. 13A, 13B, 13C, and 13D are diagrams illustrating interpolation processing in the interpolation unit according to a modification of the first embodiment.
Figs. 14A, 14B, 14C, and 14D are diagrams illustrating interpolation processing in the interpolation unit according to a second embodiment.
Figs. 15A, 15B, 15C, and 15D are diagrams illustrating interpolation processing in the interpolation unit according to a modification of the second embodiment.
Figs. 16A, 16B, 16C, and 16D are diagrams illustrating interpolation processing in the interpolation unit according to a third embodiment.
Fig. 17 is a diagram illustrating a configuration of the pixel according to a fourth embodiment.

Figs. 18A, 18B, 18C, and 18D are diagrams illustrating interpolation processing in the interpolation unit according to the fourth embodiment.

Fig. 19 is a block diagram illustrating a schematic configuration of equipment according to a fifth embodiment.

Figs. 20A and 20B are block diagrams illustrating a schematic configuration of equipment according to a sixth embodiment.

DESCRIPTION OF THE EMBODIMENTS

Hereinafter, embodiments will be described with reference to the drawings. The same or corresponding elements are denoted by the same reference numerals throughout the several drawings, and the description thereof may be omitted or simplified.

In the embodiments described below, an imaging device will be mainly described as an example of a photoelectric conversion device. However, the photoelectric conversion device to which the technology of each embodiment is applicable is not limited to the imaging device, and may be another device. For example, the technology of each embodiment can also be applied to a ranging device (for example, a focus detection device or a device for measuring distance using time of flight (ToF)) and a photometric device (device for measuring the amount of incident light).

Note that the conductivity types of the transistors described in the embodiments described below are merely examples, and the conductivity types of the transistors are not limited to the conductivity types described in the embodiments. The conductivity type described in the embodiment may be appropriately changed, and the potentials of the gate, the source, or the drain of the transistor may be appropriately changed in accordance with the change.

For example, in a transistor that operates as a switch, when the conductivity type is changed, the low level or the high level of the potential supplied to the gate are reversed with respect to the description in the embodiment.

In the following embodiments, connection between elements of a circuit may be described. In this case, even when an element is interposed between elements of interest, the elements of interest are regarded as being connected to each other unless otherwise specified. For example, an element A is connected to one node of a capacitor C having a plurality of nodes, and an element B is connected to the other node of the capacitor C. Even in such a case, the element A and the element B are regarded as being connected to each other unless otherwise specified.

First Embodiment

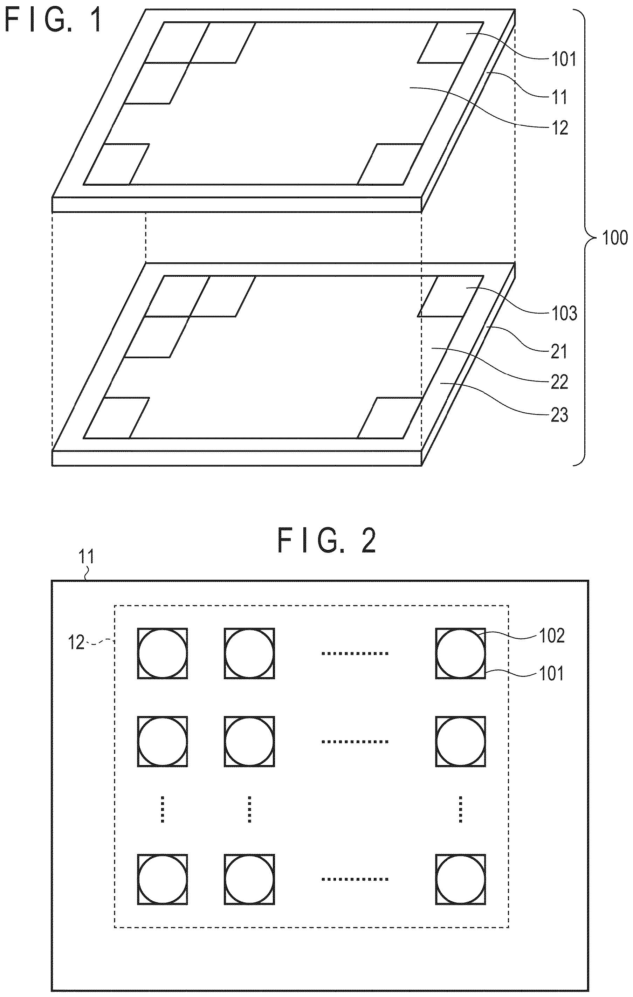

A configuration of a photoelectric conversion device according to the present embodiment will be described. Fig. 1 is a schematic diagram illustrating an overall configuration of the photoelectric conversion device 100 according to the present embodiment. The photoelectric conversion device 100 includes a sensor substrate 11 (first substrate) and a circuit substrate 21 (second substrate) stacked. The sensor substrate 11 and the circuit substrate 21 are electrically connected to each other. The sensor substrate 11 has a pixel region 12 in which a plurality of pixel circuits 101 are arranged to form a plurality of rows and a plurality of columns. The circuit substrate 21 includes a first circuit region 22 in which a plurality of pixel signal processing units 103 are arranged to form a plurality of rows and a plurality of columns, and a second circuit region 23 arranged outside the first circuit region 22. The second circuit region 23 may include a circuit for controlling the plurality of pixel signal processing units 103. The sensor substrate 11 has a light incident surface for receiving incident light and a connection surface opposed to the light incident surface. The sensor substrate 11 is connected to the circuit substrate 21 on the connection surface side. That is, the photoelectric conversion device 100 is a so-called backside illumination type.

In this specification, the term "plan view" refers to a view from a direction perpendicular to a surface opposite to the light incident surface. The cross section indicates a surface in a direction perpendicular to a surface opposite to the light incident surface of the sensor substrate 11. Although the light incident surface may be a rough surface when viewed microscopically, in this case, a plan view is defined with reference to the light incident surface when viewed macroscopically.

In the following description, the sensor substrate 11 and the circuit substrate 21 are diced chips, but the sensor substrate 11 and the circuit substrate 21 are not limited to chips. For example, the sensor substrate 11 and the circuit substrate 21 may be wafers. When the sensor substrate 11 and the circuit substrate 21 are diced chips, the photoelectric conversion device 100 may be manufactured by being diced after being stacked in a wafer state, or may be manufactured by being stacked after being diced.

Fig. 2 is a schematic block diagram illustrating an arrangement example of the sensor substrate 11. In the pixel region 12, a plurality of pixel circuits 101 are arranged to form a plurality of rows and a plurality of columns. Each of the plurality of pixel circuits 101 includes a photoelectric conversion unit 102 including an avalanche photodiode (hereinafter referred to as APD) as a photoelectric conversion element in the substrate.

Of the charge pairs generated in the APD, the conductivity type corresponding to the charge used as the signal charge is referred to as a first conductivity type. The first conductivity type refers to a conductivity type in which a charge having the same polarity as the signal charge is a majority carrier. Further, a conductivity type opposite to the first conductivity type, that is, a conductivity type in which a majority carrier is a charge having a polarity different from that of a signal charge is referred to as a second conductivity type. In the APD described below, the anode of the APD is set to a fixed potential, and a signal is extracted from the cathode of the APD. Accordingly, the semiconductor region of the first conductivity type is an N-type semiconductor region, and the semiconductor region of the second conductivity type is a P-type semiconductor region. Note that the cathode of the APD may have a fixed potential and a signal may be extracted from the anode of the APD. In this case, the semiconductor region of the first conductivity type is the P-type semiconductor region, and the semiconductor region of the second conductivity type is then N-type semiconductor region. Although the case where one node of the APD is set to a fixed potential is described below, potentials of both nodes may be varied.

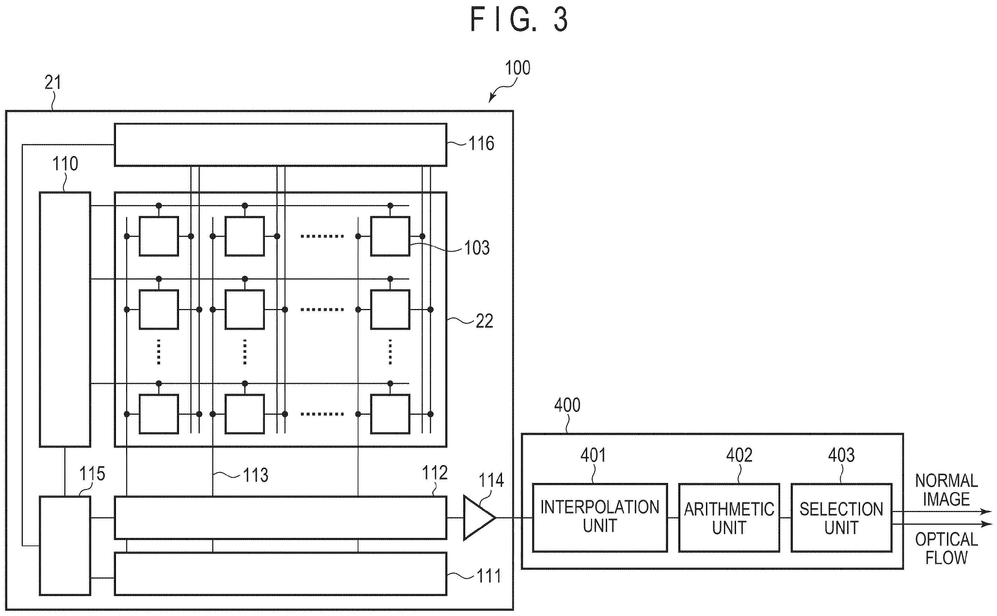

Fig. 3 is a schematic block diagram illustrating a configuration example of the circuit substrate 21. The circuit substrate 21 has the first circuit region 22 in which a plurality of pixel signal processing units 103 are arranged to form a plurality of rows and a plurality of columns.

The circuit substrate 21 includes a vertical scanning circuit 110, a horizontal scanning circuit 111, a reading circuit 112, a pixel output signal line 113, an output circuit 114, a control signal generation unit 115, and a weighting control unit 116. The plurality of photoelectric conversion units 102 illustrated in Fig. 2 and the plurality of pixel signal processing units 103 illustrated in Fig. 3 are electrically connected to each other via connection wirings provided for each pixel circuits 101.

The control signal generation unit 115 is a control circuit that generates control signals for driving the vertical scanning circuit 110, the horizontal scanning circuit 111, the reading circuit 112, and the weighting control unit 116 and supplies the control signals to these units. As a result, the control signal generation unit 115 controls the driving timings and the like of each unit.

The vertical scanning circuit 110 supplies control signals to each of the plurality of pixel signal processing units 103 based on the control signal supplied from the control signal generation unit 115. The vertical scanning circuit 110 supplies control signals for each row to the pixel signal processing unit 103 via a driving line provided for each row of the first circuit region 22. As will be described later, a plurality of driving lines may be provided for each row. A logic circuit such as a shift register or an address decoder can be used for the vertical scanning circuit 110. Thus, the vertical scanning circuit 110 selects a row to be output a signal from the pixel signal processing unit 103.

The signal output from the photoelectric conversion unit 102 of the pixel circuit 101 is processed by the pixel signal processing unit 103. The pixel signal processing unit 103 acquires and holds a digital signal based on a pulse output from the APD included in the photoelectric conversion unit 102.

The weighting control unit 116 controls a weighting coefficient (weighting amount) given to the output signal from the APD in the pixel signal processing unit 103. A reference signal including information on the weighting amount is supplied from the weighting control unit 116 to each of the plurality of pixel signal processing units 103. As illustrated in Fig. 3, two wirings for transmitting reference signals are arranged for each column. Accordingly, different weighting amounts can be given to the four pixel signal processing units 103 in two adjacent rows and two adjacent columns.

The horizontal scanning circuit 111 supplies control signals to the reading circuit 112 based on a control signal supplied from the control signal generation unit 115. The pixel signal processing unit 103 is connected to the reading circuit 112 via a pixel output signal line 113 provided for each column of the first circuit region 22. The pixel output signal line 113 in one column is shared by a plurality of pixel signal processing units 103 in the corresponding column. The pixel output signal line 113 includes a plurality of wirings, and has at least a function of outputting a digital signal from the pixel signal processing unit 103 to the reading circuit 112, and a function of supplying a control signal for selecting a column for outputting a signal to the pixel signal processing unit 103. The reading circuit 112 outputs a signal to the processing device 400 via the output circuit 114 based on the control signal supplied from the control signal generation unit 115.

The function of the pixel signal processing unit 103 does not necessarily have to be provided one by one in all the pixel circuits 101. For example, one pixel signal processing unit 103 may be shared by a plurality of pixel circuits 101. In this case, the pixel signal processing unit 103 sequentially processes the signals output from the photoelectric conversion units 102, thereby providing the function of signal processing to each pixel circuit 101.

As illustrated in Figs. 2 and 3, the first circuit region 22 having a plurality of pixel signal processing units 103 is arranged in a region overlapping the pixel region 12 in the plan view. In the plan view, the vertical scanning circuit 110, the horizontal scanning circuit 111, the reading circuit 112, the output circuit 114, the control signal generation unit 115, and the weighting control unit 116 are arranged so as to overlap a region between an edge of the sensor substrate 11 and an edge of the pixel region 12. In other words, the sensor substrate 11 includes the pixel region 12 and a non-pixel region arranged around the pixel region 12. In the circuit substrate 21, the second circuit region 23 having the vertical scanning circuit 110, the horizontal scanning circuit 111, the reading circuit 112, the output circuit 114, the control signal generation unit 115, and the weighting control unit 116 is arranged in a region overlapping with the non-pixel region in the plan view.

Note that the arrangement of the pixel output signal line 113, the arrangement of the reading circuit 112, and the arrangement of the output circuit 114 are not limited to those illustrated in Fig. 3. For example, the pixel output signal lines 113 may extend in the row direction, and may be shared by a plurality of pixel signal processing units 103 in corresponding rows. The reading circuit 112 may be provided so as to be connected to the pixel output signal line 113 of each row.

The processing device 400 performs signal processing on a signal output from the photoelectric conversion device 100. The processing device 400 includes an interpolation unit 401, an arithmetic unit 402, and a selection unit 403. The interpolation unit 401 receives a signal output from the photoelectric conversion device 100 and performs interpolation processing. The arithmetic unit 402 calculates an optical flow by receiving the signal interpolated by the interpolation unit 401. The selection unit 403 receives the signal interpolated by the interpolation unit 401 and the optical flow, and selects a signal to be output based on a value of the optical flow. Note that the processing device 400 may be provided inside the photoelectric conversion device 100 or may be provided in a device on which the photoelectric conversion device 100 is mounted.

The operations of the interpolation unit 401 and the selection unit 403 will be described in more detail later. Here, in relation to the calculation in the arithmetic unit 402, an outline of the principles of a time correlation image sensor and an event-based sensor and the generation of the optical flow using time correlation signals with weighting will be described. In the following description, a general image sensor using an ordinary photodiode is assumed, but it is also applicable to a photoelectric conversion device using an APD as in the present embodiment.

The time correlation image sensor includes a photodiode and a configuration for acquiring a signal output from the photodiode in a plurality of sections. A signal for each pixel for generating an image is expressed by the following Expression (1).

$$\left( v \cdot \nabla + \frac{\partial}{\partial t} \right) f(x, y, t) = 0 \qquad (1)$$

The f(x,y,t) is a brightness of the pixel (x,y) at time t. In addition, the v is a velocity of the pixel (x,y) (time derivative of the pixel (x,y)). The V is a nabla operator (vector differential operator).

An exposure time in acquisition of an image of one frame is defined as T. An image $g_n(x,y)$ is represented by the following Expression (2).

$$g_n(x, y) = \int_0^T f(x, y, t) \cdot e^{-i \cdot n \cdot \Delta_\omega \cdot t} dt \,, \quad \Delta_\omega = \frac{2\pi}{T} \qquad (2)$$

As indicated in Expression (2), the image $g_n(x,y)$ is obtained by multiplying the brightness f(x,y,t) by a reference signal represented by a complex number $e^{-in\Delta wt}$ and integrating the result in the range of one frame period. The captured image $g_n(x,y)$ satisfies the following Expression (3).

$$v \cdot \nabla g_n(x, y) + \left[ f(x, y, t) \right]_0^T + i \cdot n \cdot \Delta_\omega g_n(x, y) = 0, \, ^\forall n = 0, 1, 2 \cdots \qquad (3)$$

The second term on the left side of Expression (3) indicates a boundary value of integration. Since the Expression (3) is a plurality of expressions different from each other according to the value of n, Expression (3) forms simultaneous equations. Therefore, for example, by solving simultaneous equations using two images $g_0(x,y)$ and $g_1(x,y)$, it is possible to eliminate the boundary value of integration. The time correlation image sensor can output an intensity image $g_0(x,y)$ consisting of only the real part, and a real part and an imaginary part of a complex correlation image $g_n(x,y)$ (hereinafter, the complex correlation image is also referred to as a time correlation signal). Therefore, by substituting and solving the output signal of the time correlation image sensor into the simultaneous equations of Expression (3), it is possible to obtain the velocity v, that is, the optical flow in each pixel (x,y).

In the signal processing of the time correlation image sensor, it is necessary to calculate the integral in the range of one frame period as indicated in Expression (2). Therefore, the output timing of the correlation image is limited to the unit of one frame period. In the time correlation image sensor, the cycle of the reference signal and the cycle of the shutter opening period are made to coincide with each other. Therefore, the correlation image is output at a frequency corresponding to the cycle of the shutter opening period.

An event-based sensor will now be outlined. The event-based sensor detects a change in luminance within an imaging range, and outputs an event signal each time a change in luminance is detected. The event-based sensor includes, for example, a plurality of pixels arranged in a matrix. That is, the event signal is a signal associated with an event, and the event is a luminance change of a pixel. As one example, the event signal includes a time at which an event is detected, a position of a pixel at which the event is detected, and a change in a pixel value. The time at which the event is detected can be measured based on the time (event camera time) indicated by an internal clock of the event-based sensor.

Note that the reference of the time at which the event is detected may be reset, as necessary. The change in the pixel value is, for example, a change in luminance. The change in the pixel value may be the amount of change itself, or may be information indicating whether the luminance change is positive or negative.

The event-based sensor outputs an event signal when a luminance change occurs, and does not output an event signal when a luminance change does not occur. That is, the event-based sensor asynchronously outputs the event signal. Note that asynchronously outputting means outputting a signal in units of pixels independently in terms of time.

The operation of the event-based sensor is expressed by the following Expression (4).

$$Y(x, y, t) = Y(x, y, t_0) + \Delta Y \sum_i \int_{t_0}^{t} ds \delta(s - s_i) \cdot p(x, y, s_i) \qquad (4)$$

The $Y(x,y,t)$ in Expression (4) is an image at time t. Time $t_0$ is the measurement start time. The image $Y(x,y,t_0)$ is an initial image stored at time $t_0$. In general, the image $Y(x,y,t_0)$ can be zero. The $\Delta Y$ is a threshold value (absolute value of luminance change) of occurrence of an event. The $p(x,y,s_i)$ is the i-th event signal that occurs in the pixel $(x,y)$, and the value of $p(x,y,s_i)$ at the time of event detection is 1 or -1 depending on whether the luminance change is positive or negative. The $\delta$ $(s-s_i)$ is a Dirac delta function.

Event-based sensors may be provided with the ability to output time correlation signals, such as time correlation image sensors. When the time t is the end time of the frame period, the output signals of the time correlation image sensor can be expressed by the following Expressions (5) to (7) using an angular velocity $\omega$ $(\omega=2\pi/T)$.

$$g_0(x, y, t) = \int_{t-T}^{t} f(x, y, s) ds \qquad (5)$$

$$\text{Re}\, g_1(x, y, t) = \int_{t-T}^{t} \cos(\omega(s - t)) f(x, y, s) ds \qquad (6)$$

$$\text{Im}\, g_1(x, y, t) = \int_{t-T}^{t} \sin(\omega(s - t)) f(x, y, s) ds \qquad (7)$$

In the time correlation image sensor, charges based on current output from a photodiode are accumulated in a capacitor. The accumulated charges correspond to luminance. On the other hand, in the event-based sensor, a signal obtained by quantizing a change in current output from the photodiode is output. Therefore, in the event-based sensor, the output from the photodiode at the time s can be divided into a constant term $f(x,y,t-T)$ having a constant value within the measurement period and a variable term $\delta f(x,y,s)$ corresponding to the difference with respect to the constant term. Therefore, the $f(x,y,s)$ is expressed by the following Expression (8).

$$f(x, y, s) = f(x, y, t - T) + \delta f(x, y, s) \qquad (8)$$

Considering the properties of the reference signal, the following Expressions (9) and (10) are satisfied.

$$\int_{t-T}^{t} \cos(\omega \cdot s) ds = 0 \qquad (9)$$

$$\int_{t-T}^{t} \sin(\omega \cdot s) ds = 0 \qquad (10)$$

Using the relationships of Expressions (9) and (10), Expressions (5) to (7) can be rewritten to expressions using a constant term and a variable term. As a result, the following Expressions (11) to (13) are obtained.

$$g_0(x, y, t) = Y(x, y, t - T) + \int_{t-T}^{t} \delta f(x, y, s) ds \qquad (11)$$

$$\mathrm{Re}\, g_1(x,y,t) = \int_{t-T}^{t} \cos(\omega(s-t)) f(x,y,s)\, ds \qquad (1\ 2)$$

$$\mathrm{Im}\, g_1(x,y,t) = \int_{t-T}^{t} \sin(\omega(s-t)) f(x,y,s)\, ds \qquad (1\ 3)$$

In the event-based sensor, the current output by the photodiode of the time correlation image sensor is converted into an event signal of the event-based sensor, as represented by the following Expression (14).

$$\delta f(x,y,s) \rightarrow \Delta Y \sum_i \delta(s - s_i) \cdot p(x,y,s_i) \qquad (1\ 4)$$

As a result, the Expressions (11) to (13) can be transformed into the following Expressions (15) to (17).

$$g_0(x,y,t) = Y(x,y,t-T) + \Delta Y \int_{t-T}^{t} \delta(s-s_i) \cdot p(s,y,s_i)\, ds \qquad (1\ 5)$$

$$\mathrm{Re}\, g_1(x,y,t) = \Delta Y \int_{t-T}^{t} \cos(\omega(s-t)) \sum_i \delta(s-s_i) \cdot p(x,y,s_i)\, ds \qquad (1\ 6)$$

$$\mathrm{Im}\, g_1(x,y,t) = \Delta Y \int_{t-T}^{t} \sin(\omega(s-t)) \sum_i \delta(s-s_i) \cdot p(x,y,s_i)\, ds \qquad (1\ 7)$$

As indicated in Expressions (15) to (17), it is possible to output the time correlation signal by using the event signal generated during the period (cycle T) in which the signal is acquired.

Conversely, if it is possible to acquire a signal periodically weighted by a cosine function or a sine function as in Expressions (16) and (17) from the photoelectric conversion device 100, an optical flow can be calculated by arithmetic processing based on Expressions (1) to (17).

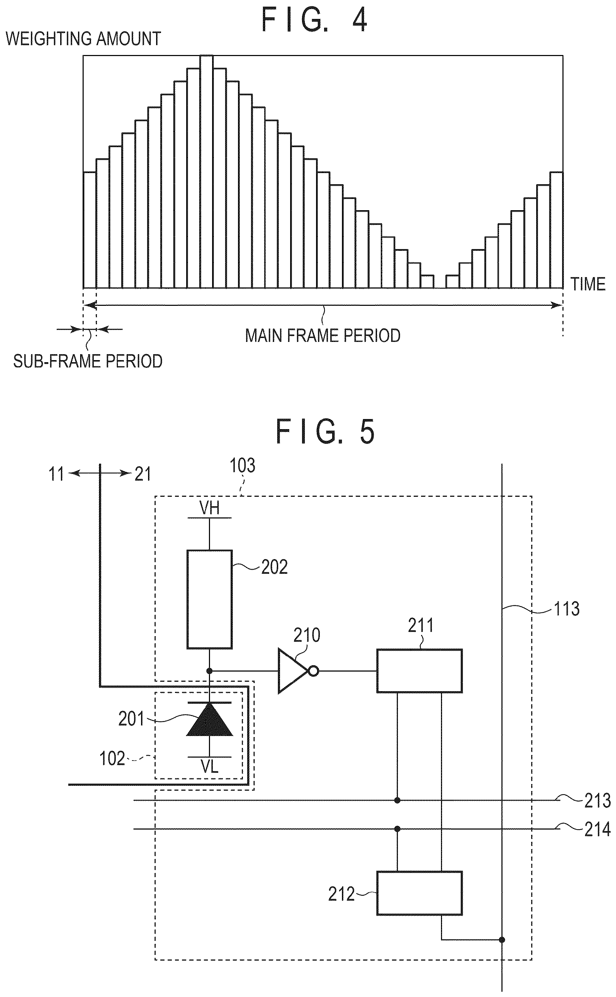

Fig. 4 is a diagram illustrating a relationship between a main frame period and sub-frame periods and a temporal change in a weighting amount according to the first embodiment. In the graph illustrated in Fig. 4, the horizontal axis indicates time, and the vertical axis indicates the weighting amount set by the weighting control unit 116. As illustrated in Fig. 4, a main frame period, which is an exposure period for generating one frame, is divided into a plurality of sub-frame periods. The weighting control unit 116 sets the weighting amount so that the weighting amount changes every time the sub-frame period elapses. The weighting amount may be set based on a periodic function in which the time is a variable and the main frame period is one cycle. In other words, the periodic function has a different phase for each sub-frame period. The periodic function used to set the weighting amount may be a sine function. By performing weighting by the weighting amount based on the sine function, a signal corresponding to Expression (17) can be generated. The periodic function used to set the weighting amount may be a cosine function. By performing weighting by the weighting amount based on the cosine function, a signal corresponding to Expression (16) can be generated. The weighting amount may be a constant value in the main frame period. In this case, it is possible to generate a signal for normal pixel generation whose weighting does not vary with time.

Fig. 5 is a schematic block diagram illustrating a configuration example of one pixel of the photoelectric conversion unit 102 and the pixel signal processing unit 103 according to the present embodiment. Fig. 5 schematically illustrates a more specific configuration example including a connection relationship between the photoelectric conversion unit 102 arranged in the sensor substrate 11 and the pixel signal processing unit 103 arranged in the circuit substrate 21. In Fig. 5, driving lines between the vertical scanning circuit 110 and the pixel signal processing unit 103 in Fig. 3 are illustrated as driving lines 213 and 214.

The photoelectric conversion unit 102 includes an APD 201. The pixel signal processing unit 103 includes a quenching element 202, a waveform shaping unit 210, a counter circuit 211, and a selection circuit 212. The pixel signal processing unit 103 may include at least one of the waveform shaping unit 210, the counter circuit 211, and the selection circuit 212.

The APD 201 generates a charge pair corresponding to incident light by photoelectric conversion. A voltage VL (first voltage) is supplied to the anode of the APD 201. The cathode of the APD 201 is connected to a first terminal of the quenching element 202 and an input terminal of the waveform shaping unit 210. A voltage VH (second voltage) higher than the voltage VL supplied to the anode is supplied to the cathode of the APD 201. As a result, a reverse bias voltage that causes the APD 201 to perform the avalanche multiplication operation is supplied to the anode and the cathode of the APD 201. In the APD 201 to which the reverse bias voltage is supplied, when a charge is generated by the incident light, this charge causes avalanche multiplication, and an avalanche current is generated.

The operation modes in the case where a reverse bias voltage is supplied to the APD 201 include a Geiger mode and a linear mode. The Geiger mode is a mode in which a potential difference between the anode and the cathode is higher than a breakdown voltage, and the linear mode is a mode in which a potential difference between the anode and the cathode is near or lower than the breakdown voltage.

The APD operated in the Geiger mode is referred to as a single photon avalanche diode (SPAD). In this case, for example, the voltage VL (first voltage) is -30 V, and the voltage VH (second voltage) is 1 V. The APD 201 may operate in the linear mode or the Geiger mode. In the case of the SPAD, a potential difference becomes greater than that of the APD of the linear mode, and the effect of avalanche multiplication becomes significant, so that the SPAD may be used.

The quenching element 202 functions as a load circuit (quenching circuit) when a signal is multiplied by avalanche multiplication. The quenching element 202 suppresses the voltage supplied to the APD 201 and suppresses the avalanche multiplication (quenching operation). Further, the quenching element 202 returns the voltage supplied to the APD 201 to the voltage VH by passing a current corresponding to the voltage drop due to the quenching operation (recharge operation). The quenching element 202 may be, for example, a transistor.

The waveform shaping unit 210 shapes the potential change of the cathode of the APD 201 obtained at the time of photon detection, and outputs a pulsed signal. For example, an inverter circuit is used as the waveform shaping unit 210. Although Fig. 5 illustrates an example in which one inverter is used as the waveform shaping unit 210, the waveform shaping unit 210 may be a circuit in which a plurality of inverters are connected in series, or may be another circuit having a waveform shaping effect.

The counter circuit 211 counts the pulsed signal output from the waveform shaping unit 210 and holds a digital signal indicating the count value. When a control signal is supplied from the vertical scanning circuit 110 through the driving line 213, the counter circuit 211 resets the signal held therein.

The selection circuit 212 is supplied with a control signal from the vertical scanning circuit 110 illustrated in Fig. 3 through the driving line 214 illustrated in Fig. 5. In response to this control signal, the selection circuit 212 switches between the electrical connection and the non-connection of the counter circuit 211 and the pixel output signal line 113. The selection circuit 212 includes, for example, a buffer circuit or the like for outputting a signal corresponding to a value held in the counter circuit 211.

In the example of Fig. 5, the selection circuit 212 switches between the electrical connection and the non-connection of the counter circuit 211 and the pixel output signal line 113; however, the method of controlling the signal output to the pixel output signal line 113 is not limited thereto. For example, a switch such as a transistor may be arranged at a node such as between the quenching element 202 and the APD 201 or between the photoelectric conversion unit 102 and the pixel signal processing unit 103, and the signal output to the pixel output signal line 113 may be controlled by switching the electrical connection and the non-connection. Alternatively, the signal output to the pixel output signal line 113 may be controlled by changing the value of the voltage VH or the voltage VL supplied to the photoelectric conversion unit 102 using a switch such as a transistor.

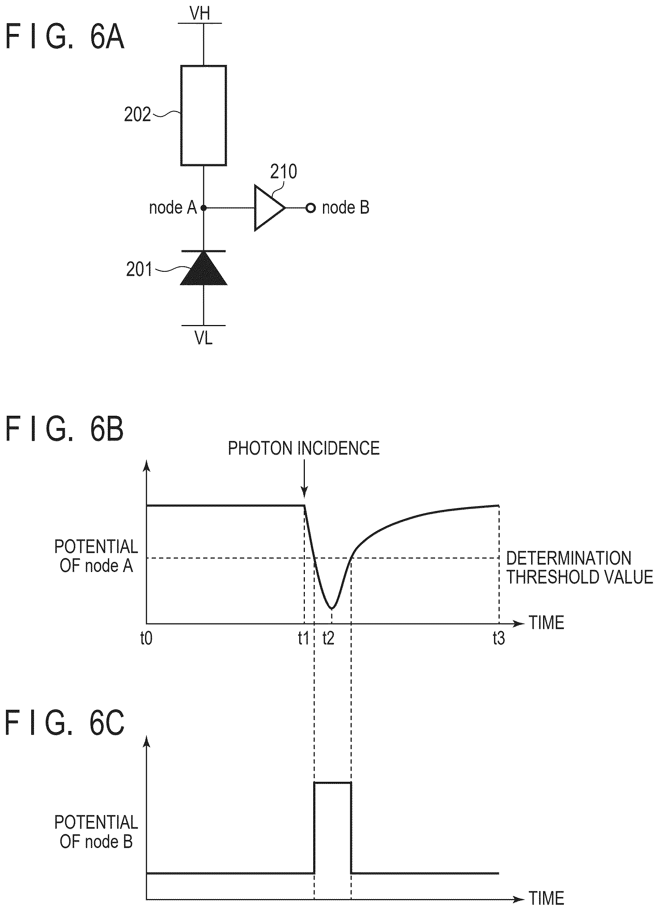

Figs. 6A, 6B, and 6C are diagrams illustrating an operation of the APD 201 according to the present embodiment. Fig. 6A is a diagram illustrating the APD 201, the quenching element 202, and the waveform shaping unit 210 in Fig. 5. As illustrated in Fig. 6A, the connection node of the APD 201, the quenching element 202, and the input terminal of the waveform shaping unit 210 is referred to as node A. Further, as illustrated in Fig. 6A, an output side of the waveform shaping unit 210 is referred to as node B.

Fig. 6B is a graph illustrating a temporal change in the potential of node A in Fig. 6A. Fig. 6C is a graph illustrating a temporal change in the potential of node B in Fig. 6A. During a period from time t0 to time t1, the voltage VH-VL is applied to the APD 201 in Fig. 6A. When a photon is incident on the APD 201 at the time t1, avalanche multiplication occurs in the APD 201. As a result, an avalanche current flows through the quenching element 202, and the potential of the node A drops. Thereafter, the amount of potential drop further increases, and the voltage applied to the APD 201 gradually decreases. Then, at time t2, the avalanche multiplication in the APD 201 stops. Thereby, the voltage level of node A does not drop below a certain constant value. Then, during a period from the time t2 to time t3, a current that compensates for the voltage drop flows from the node of the voltage VH to the node A, and the node A is settled to the original potential at the time t3.

In the above-described process, the potential of node B becomes the high level in a period in which the potential of node A is lower than a certain threshold value. In this way, the waveform of the drop of the potential of the node A caused by the incidence of the photon is shaped by the waveform shaping unit 210 and output as a pulse to the node B.

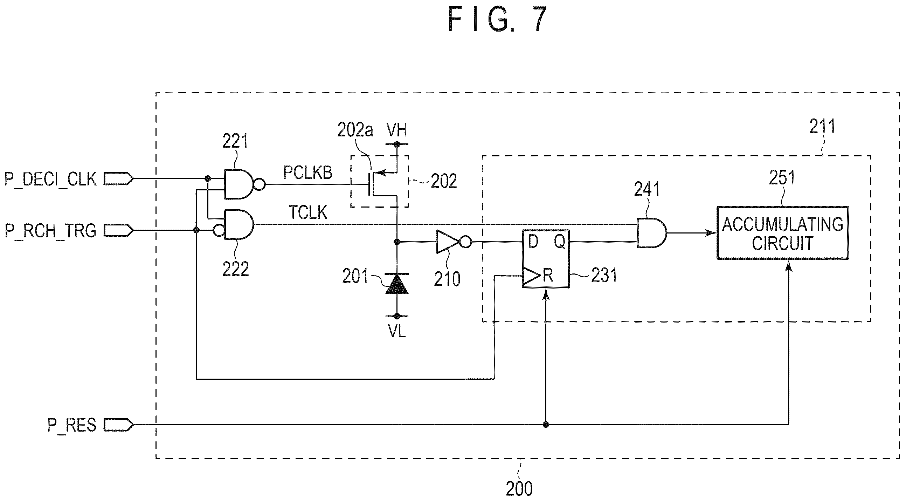

Fig. 7 is a diagram illustrating a configuration of a pixel according to the present embodiment. Fig. 7 illustrates the photoelectric conversion unit 102 and the pixel signal processing unit 103 in Fig. 5 in more detail. Hereinafter, an element obtained by combining the photoelectric conversion unit 102 and the pixel signal processing unit 103 may be referred to as a pixel 200. In Fig. 7, elements having the same functions as those illustrated in Fig. 5 are denoted by the same reference numerals as those in Fig. 5, and descriptions of these elements may be omitted or simplified.

The pixel 200 includes the APD 201, the quenching element 202, the waveform shaping unit 210, the counter circuit 211, a NAND circuit 221, and a logic circuit 222. The quenching element 202 has a P-type MOS transistor 202a. The counter circuit 211 includes a flip-flop circuit 231, an AND circuit 241, and an accumulating circuit 251.

A signal P_DECI_CLK is input to the pixel 200 from the weighting control unit 116. Signals P_RCH_TRG and P_RES are input to the pixels 200 from the vertical scanning circuit 110.

The signal P_DECI_CLK is a pulsed signal indicating a weighting amount set by the weighting control unit 116. As described above, the weighting amount is determined by a periodic function in which one cycle of the periodic function is the main frame period. The periodic function is, for example, the sine function or the cosine function. The weighting control unit 116 generates the signal P_DECI_CLK by thinning out a part of pulses from the clock signal input to the weighting control unit 116. The weighting amount may be a constant value in the main frame period.

The signal P_DECI_CLK is input to a first input terminal of the NAND circuit 221, and the signal P_RCH_TRG is input to a second input terminal of the NAND circuit 221. The signal P_RCH_TRG indicates the start of the sub-frame period. The signal P_RCH_TRG becomes the high level at the start of the sub-frame period, and then becomes the low level. Then, the signal P_RCH_TRG is maintained at the low level until the end of the sub-frame. The NAND circuit 221 outputs a signal obtained by inverting a logical product of the signal P_DECI_CLK and the signal P_RCH_TRG as a signal PCLKB. An output terminal of the NAND circuit 221 is connected to a gate of the MOS transistor 202a. The voltage VH is supplied to a source of the MOS transistor 202a. A drain of the MOS transistor 202a is connected to the cathode of the APD 201 and the input terminal of the waveform shaping unit 210.

The signal PCLKB controls a timing of the recharge operation in the APD 201. When both of the signals P_DECI_CLK and P_RCH_TRG become the high level, the signal PCLKB becomes the low level. In this case, the MOS transistor 202a is turned on, and a recharge operation is performed in the APD 201. The recharge operation is performed once in one sub-frame period.

The logic circuit 222 outputs a logical product of an input signal of a first input terminal and an inverted value of an input signal of a second input terminal. The signal P_DECI_CLK is input to the first input terminal of the logic circuit 222, and the signal P_RCH_TRG is input to the second input terminal of the logic circuit 222. The logic circuit 222 outputs a logical product of the signal P_DECI_CLK and an inverted value of the signal P_RCH_TRG as a signal TCLK. An output terminal of the logic circuit 222 is connected to a first input terminal of the AND circuit 241. That is, the signal TCLK is input to the first input terminal of the AND circuit 241.

The output terminal of the waveform shaping unit 210 is connected to an input terminal D of the flip-flop circuit 231. The signal P_RES is input to a reset terminal R of the flip-flop circuit 231. The signal P_RES controls a reset of a signal held in the flip-flop circuit 231. The signal P_RCH_TRG is input to a clock input terminal of the flip-flop circuit 231. The signal P_RCH_TRG controls a holding timing of a signal in the flip-flop circuit 231. An output terminal Q of the flip-flop circuit 231 is connected to a second input terminal of the AND circuit 241.

The AND circuit 241 outputs a logical product of the signal TCLK and the output signal of the flip-flop circuit 231 to the accumulating circuit 251. The accumulating circuit 251 counts the number of pulses by accumulating the pulses of the input signal. The accumulating circuit 251 holds a count value obtained by the counting. The signal P_RES is input to the accumulating circuit 251.

The signal P_RES becomes the high level at the start of one main frame. As a result, the signal held in the flip-flop circuit 231 and the count value held in the accumulating circuit 251 are reset.

In the pixel 200 according to the present embodiment, the output signal of the waveform shaping unit 210 becomes the high level in response to incidence of a photon on the APD 201. When the level change of the output signal of the waveform shaping unit 210 is held in the flip-flop circuit 231, the signal output from the output terminal Q of the flip-flop circuit 231 becomes the high level. After that, every time the signal P_DECI_CLK transitions from the low level to the high level, that is, every time the signal TCLK transitions from the low level to the high level, the output signal of the AND circuit 241 transitions from the low level to the high level. Accordingly, after the level of the output signal of the flip-flop circuit 231 is changed to the high level, the accumulating circuit 251 holds the count value corresponding to the number of times the signal TCLK has transitioned from the low level to the high level.

In this way, the count value of the accumulating circuit 251 generated in response to the incidence of one photon is weighted by the signal TCLK. As a result, the accumulating circuit 251 can perform accumulation in which the incidence of one photon is weighted.

For example, when weighting corresponding to the sine function is performed, the number of pulses of the signal P_DECI_CLK is set so that the weighting amount of each sub-frame period illustrated in Fig. 4 is changed according to the sine function. In this case, the cycle of the sine function corresponds to the cycle of the main frame period.

Similarly, when weighting corresponding to the cosine function is performed, the number of pulses of the signal P_DECI_CLK is set so that the weighting amount of each sub-frame period illustrated in Fig. 4 is changed according to the cosine function. Also in this case, the cycle of the cosine function corresponds to the cycle of the main frame period.

As described above, in the present embodiment, the photoelectric conversion device 100 can generate the count value in which the signal indicating the incidence of the photon on the APD 201 is weighted by the sine function or the cosine function. Therefore, in the present embodiment, time correlation imaging can be performed by the photoelectric conversion device 100 including the APD 201.

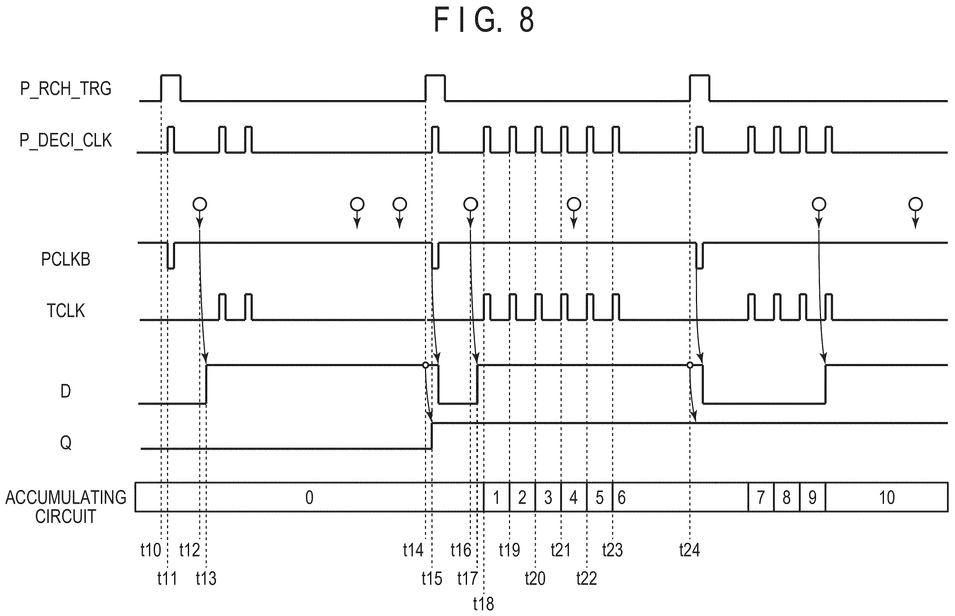

Fig. 8 is a timing chart illustrating a driving method of the pixel 200 according to the present embodiment. Fig. 8 illustrates the levels of the signals P_RCH_TRG, P_DECI_CLK, PCLKB, and TCLK, the levels of the potentials of the input terminal D and the output terminal Q of the flip-flop circuit 231, and the count value held in the accumulating circuit 251. Further, in Fig. 8, circles illustrated above the signal PCLKB indicate the incident timings of photons to the APD 201.

At time t10, the signal P_RCH_TRG becomes the high level. The time t10 is the start time of one sub-frame period.

At time t11, the signal P_DECI_CLK also becomes the high level, and the signal PCLKB output from the NAND circuit 221 becomes the low level. As a result, the transistor 202a is turned on, and a recharge operation in the APD 201 is performed. This recharge operation is performed once in one sub-frame period.

Time t12 is a time at which a photon is incident on the APD 201 for the first time in the sub-frame period started from the time t10. Due to the incidence of the photon, the output signal of the waveform shaping unit 210 becomes the high level at time t13, and the potential of the input terminal D of the flip-flop circuit 231 also becomes the high level. After the time t13, even if a photon is incident on the APD 201 again in this sub-frame period, no change occurs in the operation of the pixel 200, and the same state is maintained until time t14.

At the time t14, the signal P_RCH_TRG becomes the high level. The time t14 is the start time of the sub-frame period next to the sub-frame period started from the time t10. When the high-level signal P_RCH_TRG is input to the clock input terminal of the flip-flop circuit 231, the potential of the output terminal Q of the flip-flop circuit 231 becomes the high level at time t15.

In addition, at the time t15, the signal P_DECI_CLK also becomes the high level, and the signal PCLKB output from the NAND circuit 221 becomes the low level. As a result, the transistor 202a is turned on, and a recharge operation in the APD 201 is performed. As a result, after the time t15, the output signal of the waveform shaping unit 210 becomes the low level, and the potential of the input terminal D of the flip-flop circuit 231 also becomes the low level.

Time t16 is a time at which a photon is incident on the APD 201 for the first time in the sub-frame period started from the time t14. Due to the incidence of the photon, the output signal of the waveform shaping unit 210 becomes the high level at time t17, and the potential of the input terminal D of the flip-flop circuit 231 also becomes the high level.

On the other hand, in each of time t18 to time t23, the signal P_DECI_CLK becomes the high level. At this time, since the signal P_RCH_TRG is at the low level, the level of the signal TCLK output from the logic circuit 222 changes similarly to the signal P_DECI_CLK. Since the potential of the output terminal Q of the flip-flop circuit 231 is at the high level at these times, the level of the signal output from the AND circuit 241 is also the same as that of the signal P_DECI_CLK. The accumulating circuit 251 accumulates the signals input at each of the time t18 to time t23. Therefore, the count value held in the accumulating circuit 251 increases by one at each of the time t18 to time t23. By this operation, the count value held in the accumulating circuit 251 increases from zero to six in the sub-frame period.

At time t24, the signal P_RCH_TRG becomes the high level. The time t24 is the start time of the sub-frame period next to the sub-frame period started from the time t14. Since the subsequent operations are the same, the description thereof will be omitted.

As described above, the pixel 200 according to the present embodiment generates the count value weighted by the number of pulses included in the signal TCLK input in the current sub-frame period when a photon is detected in the previous sub-frame period. Note that the method of weighting in the pixel 200 is not limited to the above-described method, and other methods may be used.

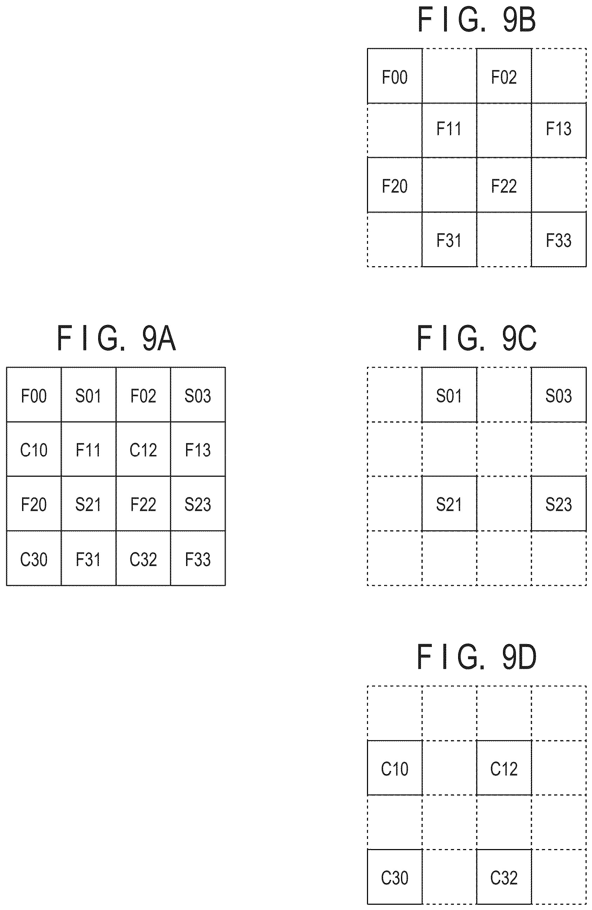

Figs. 9A to 9D are diagrams illustrating a relationship between pixel values and coordinates of pixels according to the present embodiment. Fig. 9A schematically illustrates pixel values output from 16 pixels 200 in a range from the zeroth row to the third row and from the zeroth column to the third column among the plurality of pixels 200 arranged in a matrix, in association with coordinates of the pixels 200.

Normal pixel values F00, F02, F11, F13, F20, F22, F31, and F33 (third pixel values) in Fig. 9A are signals that are generated using a weighting amount whose value does not vary with respect to time and held in the accumulating circuit 251 (third accumulating circuit). The number of pulses of the signal P_DECI_CLK input to the pixels 200 at the coordinates of the normal pixel values F00, F02, F11, F13, F20, F22, F31, and F33 is constant for each sub-frame period. Thus, in the APD 201 (third avalanche photodiode) included in the pixels at these coordinates, the signal indicating the incidence of the photon is weighted by a weight that does not vary with time. Therefore, the normal pixel values F00, F02, F11, F13, F20, F22, F31, and F33 are used as pixel values for normal image generation.

Sine pixel values S01, S03, S21, and S23 (second pixel values) in Fig. 9A are signals that are generated by using a weighting amount (second weight) whose value varies with time by the sine function, and held in the accumulating circuit 251 (second accumulating circuit). The number of pulses of the signal P_DECI_CLK input to the pixels 200 at the coordinates of the sine pixel values S01, S03, S21, and S23 varies according to the sine function with respect to the sub-frame period. Thus, in the APD 201 (second avalanche photodiode) included in the pixels at these coordinates, the signal indicating the incidence of the photon is weighted by the weight based on the sine function. Therefore, the sine pixel values S01, S03, S21, and S23 are used as the pixel values for optical flow calculation.

Cosine pixel values C10, C12, C30, and C32 (first pixel values) in Fig. 9A are signals that are generated by using a weighting amount (first weight) whose value varies with time by the cosine function, and held in the accumulating circuit 251 (first accumulating circuit). The number of pulses of the signal P_DECI_CLK input to the pixels 200 at the coordinates of the cosine pixel values C10, C12, C30, and C32 varies according to the cosine function with respect to the sub-frame period. Thus, in the APD 201 (first avalanche photodiode) included in the pixels at these coordinates, the signal indicating the incidence of the photon is weighted by the weight based on the cosine function. Therefore, the cosine pixel values C10, C12, C30, and C32 are also used as the pixel values for optical flow calculation.

In the example of Fig. 9A, two pixels that output normal pixel values are arranged within the range of four pixels of two rows and two columns. In addition, one pixel that outputs a sine pixel value is arranged within the range of four pixels of two rows and two columns, and one pixel that outputs a cosine pixel value is arranged within the range of four pixels of two rows and two columns. In other words, pixels that outputs normal pixel values, a pixel that outputs a sine pixel value, and a pixel that outputs a cosine pixel value form a repetitive arrangement in units of two rows and two columns.

Fig. 9B illustrates the normal pixel values F00, F02, F11, F13, F20, F22, F31, and F33 extracted from Fig. 9A. Fig. 9C illustrates the sine pixel values S01, S03, S21, and S23 extracted from Fig. 9A. Fig. 9D illustrates the cosine pixel values C10, C12, C30, and C32 extracted from Fig. 9A.

Referring to Figs. 9B, 9C, and 9D, when pixels from which normal pixel values are output, pixels from which sine pixel values are output, and pixels from which cosine pixel values are output are compared, their positions and their numbers are different from each other. Therefore, it is difficult to use the output pixel values directly for calculation of the optical flow. Therefore, the interpolation unit 401 performs interpolation processing for matching the positions and the number of the respective pixels.

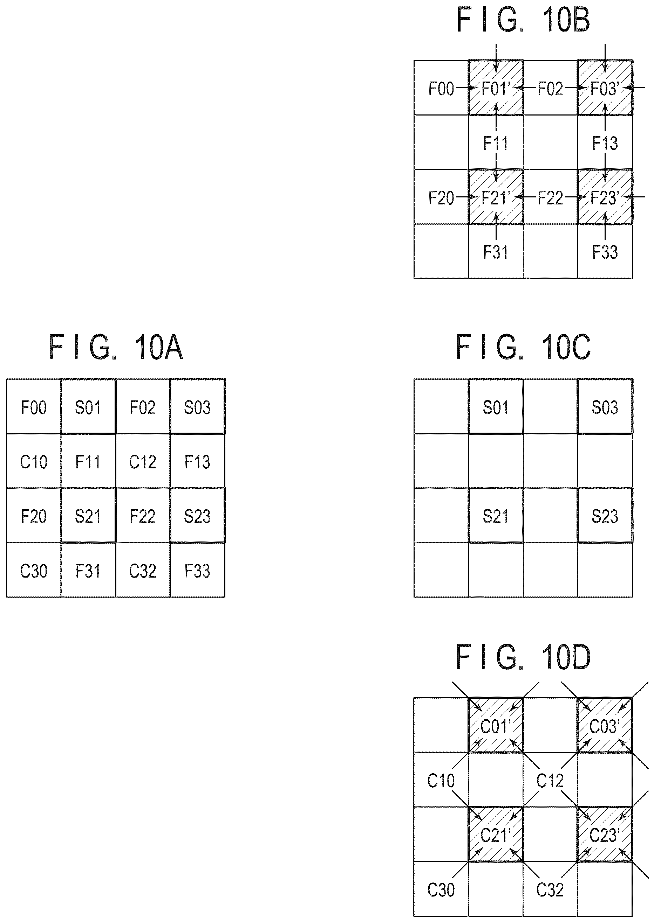

Figs. 10A to 10D are diagrams illustrating interpolation processing in the interpolation unit 401 according to the present embodiment. Fig. 10A illustrates the arrangement of pixel values similar to Fig. 9A. The interpolation unit 401 sets a pixel centroid which is a coordinate of a pixel value to be obtained by interpolation. In the example of Fig. 10A, the coordinates of the sine pixel values S01, S03, S21, and S23 are set as the pixel centroids. The interpolation unit 401 calculates pixel values that do not exist at the pixel centroids by linear interpolation. That is, in the example of Fig. 10A, the normal pixel values and the cosine pixel values are calculated by linear interpolation. The calculation expression used for the linear interpolation may be, for example, an expression for calculating an average value of a plurality of pixel values in the vicinity of the pixel centroid. The pixel centroid is virtual coordinates associated with the pixel value obtained by the interpolation processing, and is representative coordinates representing a plurality of pixel values used in the interpolation processing.

Fig. 10B illustrates an example in which normal pixel values F01', F03', F21', and F23' (third interpolation pixel values) are calculated by interpolation processing using linear interpolation. The coordinates of the normal pixel values F01', F03', F21', and F23' (third representative coordinates) are the same as the coordinates of the sine pixel values S01, S03, S21, and S23 set as the pixel centroids, respectively. Since there are no normal pixel values at these coordinates, interpolation processing is performed using the coordinates of the normal pixel values F01', F03', F21', and F23' as pixel centroids. In Fig. 10B, the start point of the arrow indicates the coordinates of the pixel value used for interpolation, and the end point of the arrow indicates the coordinates of the pixel value obtained after interpolation. As illustrated in Fig. 10B, four normal pixel values existing in the vertical and horizontal directions are used for linear interpolation of each of the normal pixel values F01', F03', F21', and F23'.

For example, the normal pixel value F21' is calculated by linear interpolation using the normal pixel values F11, F20, F22, and F31. The following Expression (18) is an expression for calculating the normal pixel value F21'.

$$F21' = \frac{F11 + F20 + F22 + F31}{4} \qquad (18)$$

Fig. 10C illustrates the sine pixel values S01, S03, S21, and S23 set as the pixel centroids. Since the sine pixel values S01, S03, S21, and S23 already exist at the pixel centroids, interpolation processing is not performed on the sine pixel values.

Fig. 10D illustrates an example in which cosine pixel values C01', C03', C21', and C23' (first interpolation pixel values) are calculated by interpolation processing using linear interpolation. The coordinates of the cosine pixel values C01', C03', C21', and C23' (first representative coordinates) are the same as the coordinates of the sine pixel values S01, S03, S21, and S23 set as the pixel centroids, respectively. Since there are no cosine pixel values at these coordinates, interpolation processing by linear interpolation is performed. As illustrated in Fig. 10D, four cosine pixel values existing in the oblique positions are used for linear interpolation of each of the cosine pixel values C01', C03', C21', and C23'.

For example, the cosine pixel value C21' is calculated by linear interpolation using the cosine pixel values C10, C12, C30, and C32. The following Expression (19) is an expression for calculating the cosine pixel value C21'.

$$C21' = \frac{C10 + C12 + C30 + C32}{4} \qquad (19)$$

By the above interpolation method, the normal pixel values of two rows and two columns, the sine pixel values of two rows and two columns, and the cosine pixel values of two rows and two columns are generated using the pixel values of four rows and four columns, and output to the arithmetic unit 402. The coordinates and the number of pixels from which the normal pixel values, the sine pixel values, and the cosine pixel values are output coincide with each other. Therefore, these pixel values can be used to calculate the optical flow.

Note that the above-described calculation expressions of the interpolation processing are merely examples, and the calculation expressions are not limited thereto. The number of pixels used in the interpolation processing is not limited to the above example. In addition, the arrangement of pixels that output the normal pixel values, pixels that output the sine pixel values, and pixels that output the cosine pixel values within the range of four pixels of two rows and two columns is not limited to the example described above. For example, among four pixels of two rows and two columns, two pixels of the upper right and the lower left may output the normal pixel values. In this case, for example, among four pixels of two rows and two columns, the upper left may be a pixel that outputs the cosine pixel value, and the lower right may be a pixel that outputs the sine pixel value.

The arithmetic unit 402 calculates an optical flow using the three types of pixel values output from the interpolation unit 401, and outputs the optical flow to the selection unit 403. Furthermore, the arithmetic unit 402 outputs the normal pixel values and the sine pixel values to the selection unit 403. The selection unit 403 selects pixel values to be output based on the optical flow.

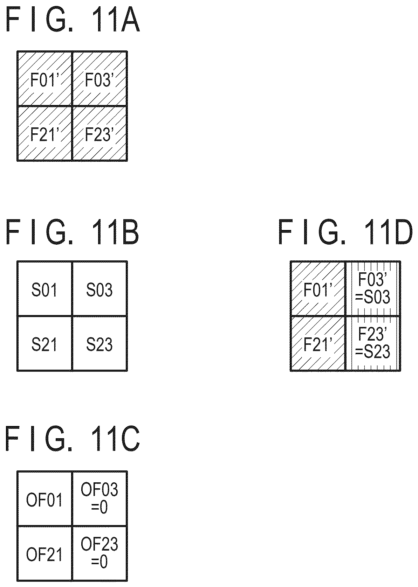

Figs. 11A to 11D are diagrams illustrating selection processing in the selection unit 403 according to the present embodiment. Figs. 11A to 11C illustrate data input to the selection unit 403. Fig. 11A illustrates the normal pixel values F01', F03', F21', and F23' of two rows and two columns generated by interpolation processing. Fig. 11B illustrates the sine pixel values S01, S03, S21, and S23 of two rows and two columns. Fig. 11C illustrates optical flows OF01, OF03, OF21, and OF23 of two rows and two columns generated by the arithmetic unit 402.

Here, as illustrated in Fig. 11C, it is assumed that the upper right optical flow OF03 and the lower right optical flow OF23 of the two rows and the two columns are zero. A state in which the value of the optical flow is zero indicates that there is no temporal change in the pixel value at the coordinates.

When the value of the optical flow is equal to or less than a threshold value, the selection unit 403 outputs the sine pixel value as a substitute for an image generation signal, that is, the normal pixel value, and when the value of the optical flow is greater than the threshold value, the selection unit 403 outputs the normal pixel value obtained by the interpolation processing as it is. Fig. 11D illustrates pixel values of two rows and two columns output from the selection unit 403. Since the optical flows OF03 and OF23 are less than the threshold values, the sine pixel values S03 and S23 are output in place of the normal pixel values F03' and F23' for the upper right and the lower right of the two rows and the two columns.

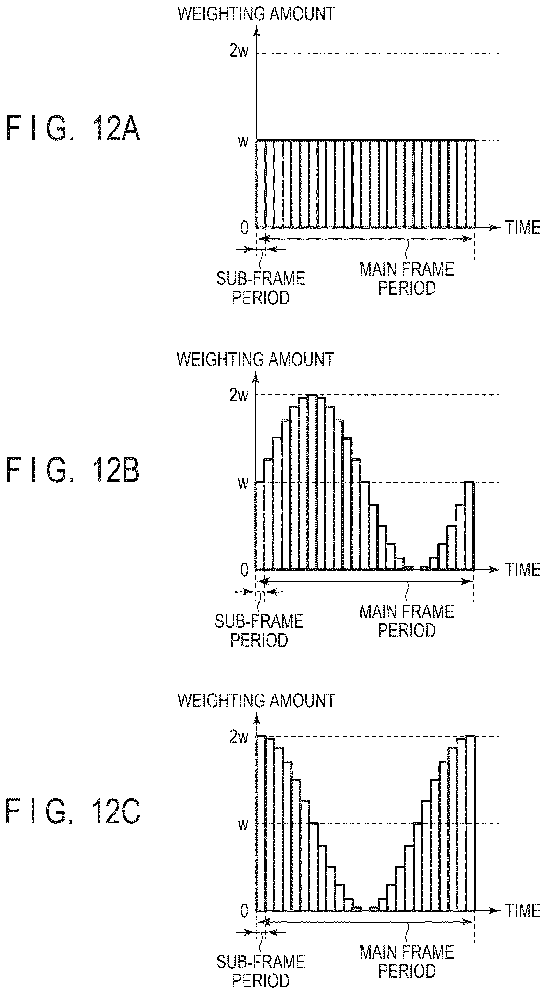

The effect of the selection unit 403 performing such an operation will be described. Figs. 12A to 12C are graphs illustrating examples of weighting amounts according to the present embodiment. Fig. 12A illustrates the weighting amount used to generate the normal pixel value. The weighting amount is expressed by, for example, a function f(t)=w that is constant with respect to the time t.

Fig. 12B illustrates the weighting amount used to generate the sine pixel value. The weighting amount is expressed by, for example, a function f(t)=w(sin(t)+1) that periodically varies with respect to the time t.

Fig. 12C illustrates the weighting amount used to generate the cosine pixel value. The weighting amount is expressed by, for example, a function f(t)=w(cos(t)+1) that periodically varies with respect to the time t.

Although the functions of the weighting amounts are explained for simplification and generalization of the description, the weighting amounts may actually be discrete values. For example, the weighting amount may be a value of six bits in which two bits are integer parts and four bits are fixed-point parts.

When these weighting amounts are accumulated over the main frame period, the accumulated values of the weighting amounts have the same value. Therefore, when there is no temporal change in the pixel value in the pixel, the values of the normal pixel value, the sine pixel value, and the cosine pixel value are the same. Therefore, when it is determined that the value of the optical flow is sufficiently small and there is no temporal change in the pixel value, it is possible to replace the sine pixel value with the normal pixel value. In this case, since the sine pixel value that is not subjected to interpolation processing can be used as the normal pixel value for image generation, an error that can be generated by interpolation processing can be reduced, and image quality can be improved.

Although the coefficients of the sine function or the cosine function and the offset values are both w in the expressions of the weighting amounts in Figs. 12A to 12C, the coefficients and the offset values may be different values.

Also in this case, the same operation can be performed by replacing the sine pixel value with the normal pixel value so that the accumulated value of the weighting amounts in the main frame period becomes the same for each weighting.

As described above, according to the present embodiment, the coordinates and the number of pixel values of each type can be matched by interpolation processing. Therefore, a photoelectric conversion device capable of acquiring a signal with higher accuracy is provided. For example, each pixel value obtained by interpolation processing may be used to calculate an optical flow.

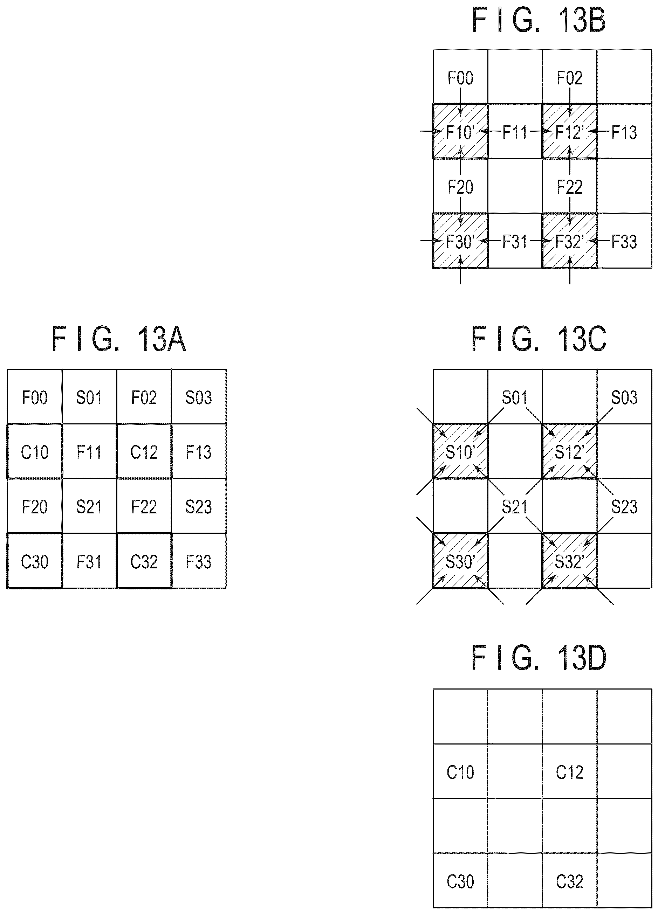

A modification of the present embodiment will be described. In the present modification, the pixel centroid is changed from the coordinates of the sine pixel value to the coordinates of the cosine pixel value. Figs. 13A to 13C are diagrams illustrating interpolation processing in the interpolation unit 401 according to the modification of the present embodiment. Fig. 13A illustrates an arrangement of pixel values similar to Fig. 9A. As illustrated in Fig. 13A, in the present modification, the interpolation unit 401 sets the coordinates of the cosine pixel values C10, C12, C30, and C32 as the pixel centroids. The interpolation unit 401 calculates pixel values that do not exist at the pixel centroids by linear interpolation. That is, in the example of Fig. 13A, the normal pixel values and the sine pixel values are calculated by linear interpolation.

Fig. 13B illustrates an example in which normal pixel values F10', F12', F30', and F32' are calculated by interpolation processing using linear interpolation. The coordinates of the normal pixel values F10', F12', F30', and F32' are the same as the coordinates of the cosine pixel values C10, C12, C30, and C32 set as the pixel centroids, respectively. Since there are no normal pixel values at these coordinates, interpolation processing by linear interpolation is performed. As illustrated in Fig. 13B, four normal pixel values existing in the vertical and horizontal directions are used for linear interpolation of each of the normal pixel values F10', F12', F30', and F32'.

For example, the normal pixel value F12' is calculated by linear interpolation using the normal pixel values F02, F11, F13, and F22. The following Expression (20) is an expression for calculating the normal pixel value F12'.

$$F12' = \frac{F02 + F11 + F13 + F22}{4} \qquad (20)$$

Fig. 13C illustrates an example in which sine pixel values S10', S12', S30', and S32' are calculated by interpolation processing using linear interpolation. The coordinates of the sine pixel values S10', S12', S30', and S32' are the same as the coordinates of the cosine pixel values C10, C12, C30, and C32 set as the pixel centroids, respectively. Since there are no sine pixel values at these coordinates, interpolation processing by linear interpolation is performed. As illustrated in Fig. 13C, four sine pixel values existing in the oblique positions are used for linear interpolation of each of the sine pixel values S10', S12', S30', and S32'.

For example, the sine pixel value S12' is calculated by linear interpolation using the sine pixel values S01, S03, S21, and S23. The following Expression (21) is an expression for calculating the sine pixel value S12'.

$$S12' = \frac{S01 + S03 + S21 + S23}{4} \qquad (21)$$

Fig. 10D illustrates the cosine pixel values C10, C12, C30, and C32 set as the pixel centroids. Since the cosine pixel values C10, C12, C30, and C32 already exist at the pixel centroids, interpolation processing is not performed on the cosine pixel values.

According to the interpolation method described above, also in the present modification, the normal pixel values of two rows and two columns, the sine pixel values of two rows and two columns, and the cosine pixel values of two rows and two columns are generated using the pixel values of four rows and four columns, and output to the arithmetic unit 402. Thus, the pixel centroids may be the coordinates of the cosine pixel values instead of the coordinates of the sine pixel values.

Any of the coordinates of two normal pixel values arranged within the range of four pixels of two rows and two columns may be set as the pixel centroid. However, in this case, one of the two normal pixel values is not used and is wasted. Therefore, as described in the present embodiment and the modified examples thereof, the coordinates of the sine pixel value or the coordinates of the cosine pixel value present in one within the range of four pixels of two rows and two columns may be set as the pixel centroid. This makes it possible to perform interpolation processing without wasting pixel values.

In the above-described example, interpolation processing is described by illustrating 16 pixel values of four rows and four columns, but in practice, similar processing may be performed on more pixel values. Further, in the expression of the interpolation processing, a simple average of four neighboring pixels is exemplified, but the interpolation processing is not limited to this method. For example, interpolation may be performed by a method of calculating an average of two pixels having a smaller difference between two pixels on the left and right sides of the pixel centroid and two pixels on the top and bottom sides of the pixel centroid, instead of an average of four pixels on the top, bottom, left, and right sides of the pixel centroid.

In the above-described example, the sine function and the cosine function are given as examples of periodic functions used for weighting, but functions other than the above-described functions may be used as long as two or more sets of weighting that change in a predetermined cycle and have different phases are possible.

Second Embodiment

In the present embodiment, a modification of the interpolation processing in the first embodiment will be described. In the interpolation processing of the first embodiment, since the normal pixel values of two rows and two columns, the sine pixel values of two rows and two columns, and the cosine pixel values of two rows and two columns are generated using the pixel values of four rows and four columns, the spatial resolutions in the vertical direction and the horizontal direction are each halved by the interpolation processing. On the other hand, in the present embodiment, a method in which the spatial resolution does not change by interpolation processing will be described. In the present embodiment, description of elements common to those of the first embodiment may be omitted or simplified.

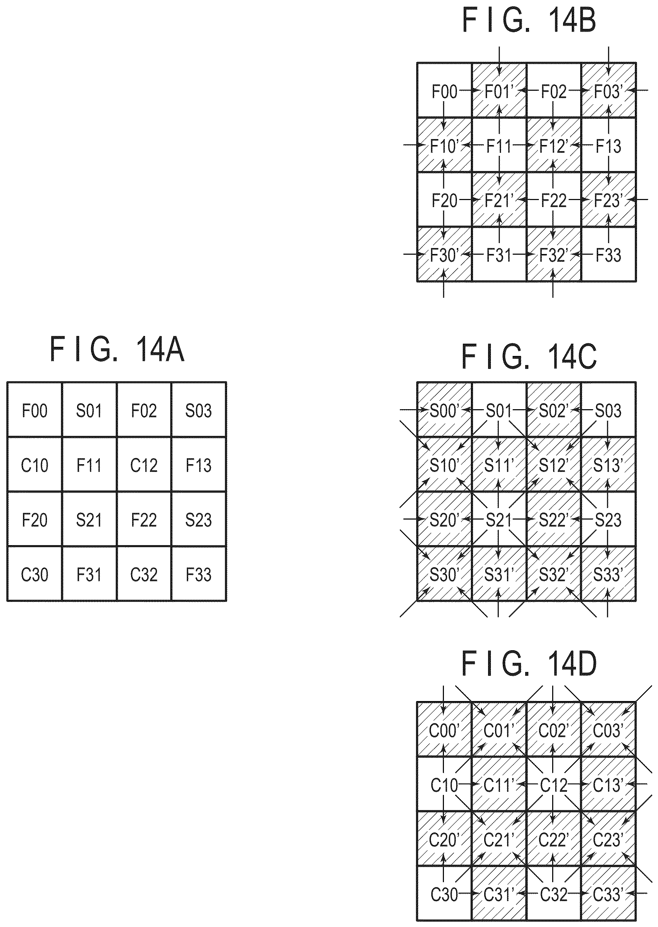

Figs. 14A to 14D are diagrams illustrating interpolation processing in the interpolation unit 401 according to the present embodiment. Fig. 14A illustrates an arrangement of pixel values similar to Fig. 9A. The interpolation unit 401 sets positions of all pixels as pixel centroids. The interpolation unit 401 calculates pixel values that do not exist at the pixel centroids by linear interpolation.

Fig. 14B illustrates an example in which normal pixel values F01', F03', F10', F12', F21', F23', F30', and F32' are calculated by interpolation processing using linear interpolation. Since there are no normal pixel values at these coordinates, interpolation processing by linear interpolation is performed. As in the first embodiment, four normal pixel values existing in the vertical and horizontal directions are used for liner interpolation of the normal pixel values. For example, the normal pixel value F21' is calculated using the above Expression (18) by linear interpolation using the normal pixel values F11, F20, F22, and F31.

Fig. 14C illustrates an example in which sine pixel values S00', S02', S10', S11', S12', S13', S20', S22', S30', S31', S32', and S33' (second interpolation pixel values) are calculated by interpolation processing using linear interpolation. Since there are no sine pixel values at these coordinates (second representative coordinates), interpolation processing by linear interpolation is performed. As illustrated in Fig. 14C, in the linear interpolation of each of the sine pixel values, two sine pixel values existing in the left and right, two sine pixel values existing in the top and bottom, or four sine pixel values existing in the oblique positions are used. For example, the sine pixel value S12' is calculated by linear interpolation using the sine pixel values S01, S03, S21, and S23 using the above Expression (21).

For example, the sine pixel value S22' is calculated by linear interpolation using the sine pixel values S21 and S23. The following Expression (22) is an expression for calculating the sine pixel value S22'.

$$S22' = \frac{S21 + S23}{2} \qquad (22)$$

For example, the sine pixel value S11' is calculated by linear interpolation using the sine pixel values S01 and S21. The following Expression (23) is an expression for calculating the sine pixel value S11'.

$$S11' = \frac{S01 + S21}{2} \qquad (23)$$

Fig. 14D illustrates an example in which cosine pixel values C00', C01', C02', C03', C11', C13', C20', C21', C22', C23', C31', and C33' are calculated by interpolation processing using linear interpolation. Since there are no cosine pixel values at these coordinates, interpolation processing by linear interpolation is performed. As illustrated in Fig. 14D, in the linear interpolation of each of the cosine pixel values, two cosine pixel values existing in the left and right, two cosine pixel values existing in the top and bottom, or four cosine pixel values existing in the oblique positions are used. For example, the cosine pixel value C21' is calculated by linear interpolation using the cosine pixel values C10, C12, C30, and C32 using the above Expression (19).

For example, the cosine pixel value C11' is calculated by linear interpolation using the cosine pixel values C10 and C12. The following Expression (24) is an expression for calculating the cosine pixel value C11'.

$$C11' = \frac{C10 + C12}{2} \qquad (24)$$

For example, the cosine pixel value C22' is calculated by linear interpolation using the cosine pixel values C12 and C32. The following Expression (25) is an expression for calculating the cosine pixel value C22'.

$$C22' = \frac{C12 + C32}{2} \qquad (25)$$

By the above interpolation method, the normal pixel values of four rows and four columns, the sine pixel values of four rows and four columns, and the cosine pixel values of four rows and four columns are generated using the pixel values of four rows and four columns, and output to the arithmetic unit 402. Therefore, in the present embodiment, the spatial resolution does not change by the interpolation processing.

As described above, also in the present embodiment, as in the first embodiment, the coordinates and the number of pixel values of each type can be matched by interpolation processing. Therefore, a photoelectric conversion device capable of acquiring a signal with higher accuracy is provided. Further, in the present embodiment, since the spatial resolution does not change by the interpolation processing, it is possible to acquire a signal having a higher spatial resolution than that in the first embodiment.

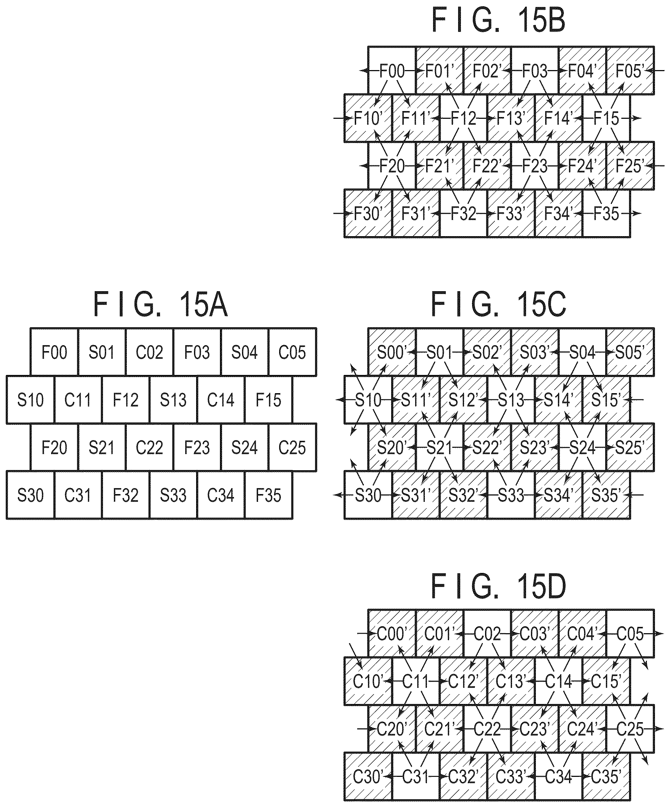

In the present embodiment, correction processing focusing on four rows and four columns in a pixel arrangement is exemplified on the assumption that the pixel arrangement is a matrix, but the pixel arrangement is not limited to a matrix. Figs. 15A to 15D are diagrams illustrating interpolation processing in the interpolation unit according to a modification of the present embodiment. In the present modification, the plurality of pixels 200 are arranged in a staggered arrangement in which pixels of each row are shifted by half pixels in the odd-numbered rows and the even-numbered rows.

Fig. 15A schematically illustrates pixel values output from 24 pixels 200 among the plurality of pixels 200 arranged in a staggered manner in association with coordinates of the pixels 200. Fig. 15A illustrates eight normal pixel values F00, F03, F12, F15, F20, F23, F32, and F35. Also, Fig. 15A illustrates eight sine pixel values S01, S04, S10, S13, S21, S24, S30, and S33 and eight cosine pixel values C02, C05, C11, C14, C22, C25, C31, and C34. The pixel arrangement of Fig. 15A can be regarded as a repetitive arrangement in which three pixels forming a triangle are alternately arranged, and the three pixels includes a pixel that outputs the normal pixel value, a pixel that outputs the sine pixel value, and a pixel that outputs the cosine pixel value.

Figs. 15B, 15C, and 15D illustrate examples in which the normal pixel value, the sine pixel value, and the cosine pixel value are calculated by interpolation processing using linear interpolation, respectively. The interpolation unit 401 sets positions of all pixels as pixel centroids. The interpolation unit 401 calculates pixel values that do not exist at the pixel centroids by linear interpolation. In the linear interpolation of each pixel value, pixel values of three pixels adjacent to the pixel centroid are used. For example, the sine pixel value S11' is calculated by linear interpolation using the sine pixel values S01, S10, and S21. The following Expression (26) is an expression for calculating the sine pixel value S11'.

$$S11' = \frac{S01 + S10 + S21}{3} \qquad (26)$$

Linear interpolation of other pixel values is similarly performed. As described above, the same interpolation processing can be performed also in the present modification. Although the matrix pixel arrangement and the staggered pixel arrangement are exemplified as the pixel arrangement, a two-dimensional pixel arrangement other than these may be employed.

In addition, in the present embodiment, a case where the shape of each pixel is a quadrangle is exemplified, but a shape other than this may be employed. For example, the shape of each pixel may be hexagonal, in which case an arrangement of so-called honeycomb structures may be employed.

Third Embodiment

In the present embodiment, a modification of the interpolation processing in the first embodiment will be described. In the first embodiment, an example is described in which any one of the coordinates of the normal pixel value, the sine pixel value, and the cosine pixel value is set as the pixel centroid. On the other hand, in the present embodiment, a method of setting coordinates different from any of the normal pixel value, the sine pixel value, and the cosine pixel value as the pixel centroid will be described. In the present embodiment, description of elements common to the first embodiment or the second embodiment may be omitted or simplified. In the present embodiment, since the selection processing in the selection unit 403 is not performed, the selection unit 403 may be omitted.

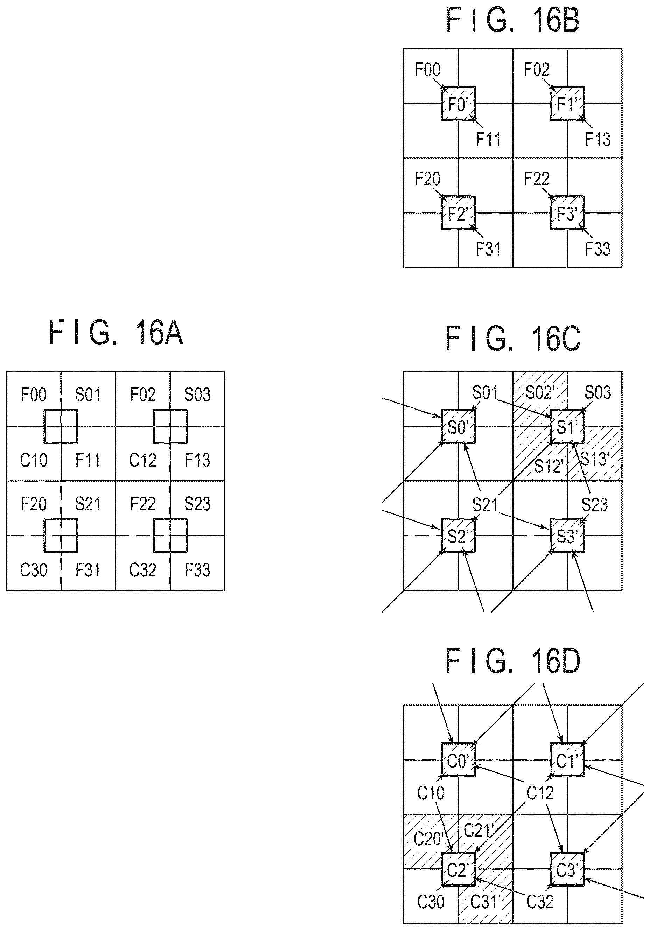

Figs. 16A to 16D are diagrams illustrating interpolation processing in the interpolation unit 401 according to the present embodiment. Fig. 16A illustrates an arrangement of pixel values similar to Fig. 9A. The interpolation unit 401 sets a pixel centroid which is a coordinate of a pixel value to be obtained by interpolation. In the example of Fig. 16A, the coordinates indicated by the thick-bordered boxes are set as the pixel centroids. The pixel centroid is the center of four pixels in two rows and two columns. The interpolation unit 401 calculates pixel values that do exist at the pixel centroid by linear interpolation. Since no pixel value exists at the pixel centroids, the interpolation unit 401 calculates the normal pixel value, the sine pixel value, and the cosine pixel value by linear interpolation.

Fig. 16B illustrates an example in which normal pixel values F0', F1', F2', and F3' are calculated by interpolation processing using linear interpolation. Since there are no normal pixel values at these coordinates, interpolation processing by linear interpolation is performed. As illustrated in Fig. 16B, two normal pixel values existing in the upper left and the lower right are used for linear interpolation of each of the normal pixel values F0', F1', F2', and F3'.

For example, the normal pixel value F0' is calculated by linear interpolation using the normal pixel values F00 and F11. The following Expression (27) is an expression for calculating the normal pixel value F0'.

$$F0' = \frac{F00 + F11}{2} \qquad (27)$$

Fig. 16C illustrates an example in which sine pixel values S0', S1', S2', and S3' are calculated by interpolation processing using linear interpolation. Since there are no sine pixel values at these coordinates, interpolation processing by linear interpolation is performed. As illustrated in Fig. 16C, four sine pixel values existing in the oblique direction of the pixel centroid are used for linear interpolation of each of the sine pixel values S0', S1', S2', and S3'.

For example, the sine pixel value S1' is calculated by linear interpolation using the sine pixel values S01, S03, S21, and S23. The following Expressions (28) to (31) are expressions for calculating the sine pixel value S1'.

$$S02' = \frac{S01 + S03}{2} \qquad (28)$$

$$S13' = \frac{S03 + S23}{2} \qquad (29)$$

$$S12' = \frac{S01 + S03 + S21 + S23}{4} \qquad (30)$$

$$S1' = \frac{S02' + S03 + S12' + S13'}{4} \qquad (31)$$

Fig. 16D illustrates an example in which cosine pixel values C0', C1', C2', and C3' are calculated by interpolation processing using linear interpolation. Since there are no cosine pixel values at these coordinates, interpolation processing by linear interpolation is performed. As illustrated in Fig. 16D, four cosine pixel values existing in the oblique direction of the pixel centroid are used for linear interpolation of each of the cosine pixel values C0', C1', C2', and C3'.

For example, the cosine pixel value C2' is calculated by linear interpolation using the cosine pixel values C10, C12, C30, and C32. The following Expressions (32) to (35) are expressions for calculating the cosine pixel value C2'.

$$C20' = \frac{C10 + C30}{2} \qquad (32)$$

$$C31' = \frac{C30 + C32}{2} \qquad (33)$$

$$C21' = \frac{C10 + C12 + C30 + C32}{4} \qquad (34)$$

$$C2' = \frac{C20' + C21' + C30 + C31'}{4} \qquad (35)$$

By the above interpolation method, the normal pixel values of two rows and two columns, the sine pixel values of two rows and two columns, and the cosine pixel values of two rows and two columns are generated using the pixel values of four rows and four columns, and output to the arithmetic unit 402. The coordinates and the number of pixels to which the normal pixel value, the sine pixel value, and the cosine pixel value are output coincide with each other. As described above, the pixel centroid may be a coordinate different from any of the normal pixel value, the sine pixel value, and the cosine pixel value.

As described above, also in the present embodiment, as in the first embodiment, the coordinates and the number of pixel values of each type can be matched by interpolation processing. Therefore, a photoelectric conversion device capable of acquiring a signal with higher accuracy is provided.

Fourth Embodiment

In the present embodiment, a modification of the pixel configuration and interpolation processing in the second embodiment will be described. The second embodiment illustrates an example in which one pixel 200 generates any one of the normal pixel value, the sine pixel value, and the cosine pixel value. On the other hand, in the present embodiment, a method in which one pixel 200 generates two of the normal pixel value, the sine pixel value, and the cosine pixel value will be described. In the present embodiment, description of elements common to the first to third embodiments may be omitted or simplified.

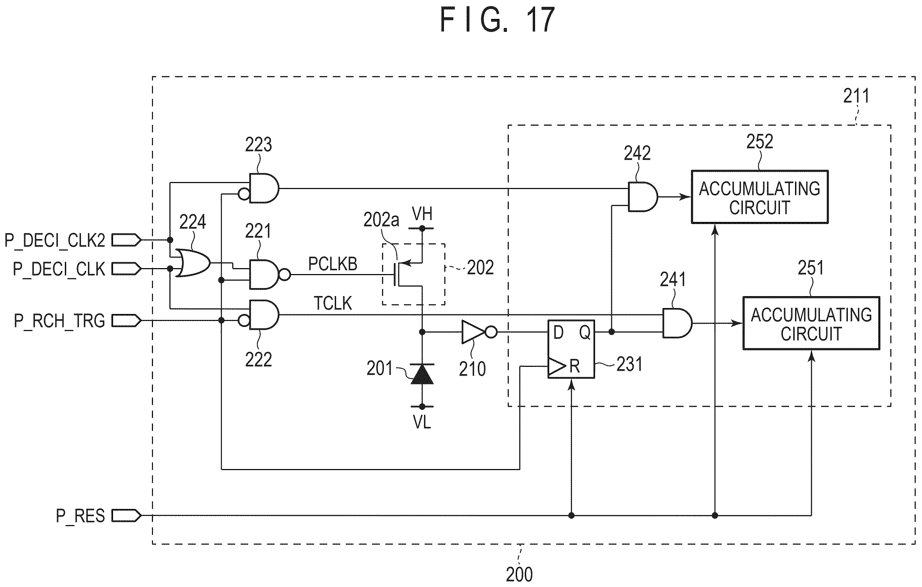

Fig. 17 is a diagram illustrating a configuration of the pixel according to the present embodiment. The pixel 200 further includes a logic circuit 223 and an OR circuit 224 in addition to the configuration of the pixel 200 illustrated in Fig. 7. The counter circuit 211 further includes an AND circuit 242 and an accumulating circuit 252 (fourth accumulating circuit) in addition to the configuration of the counter circuit 211 illustrated in Fig. 7.

A signal P_DECI_CLK2 is further input to the pixel 200 from the weighting control unit 116. The signal P_DECI_CLK2 is a pulsed signal indicating a weighting amount different from that of the signal P_DECI_CLK.

The signal P_DECI_CLK2 is input to a first input terminal of the OR circuit 224, and the signal P_DECI_CLK is input to a second input terminal of the OR circuit 224. The OR circuit 224 outputs a logical sum of the signal P_DECI_CLK and the signal P_DECI_CLK2 to the first input terminal of the NAND circuit 221.

The logic circuit 223 outputs a logical product of an input signal of a first input terminal and an inverted value of an input signal of a second input terminal. The signal P_DECI_CLK2 is input to the first input terminal of the logic circuit 223, and the signal P_RCH_TRG is input to the second input terminal of the logic circuit 223. The logic circuit 223 outputs a logical product of the signal P_DECI_CLK2 and an inverted value of the signal P_RCH_TRG to a first input terminal of the AND circuit 242. The output signal from the output terminal Q of the flip-flop circuit 231 is input to a second input terminal of the AND circuit 242.

The AND circuit 242 outputs a logical product of the output signal of the logic circuit 223 and the output signal of the flip-flop circuit 231 to the accumulating circuit 252. The accumulating circuit 252 counts the number of pulses by accumulating the pulses of the input signal. The accumulating circuit 252 holds a count value obtained by the counting. The signal P_RES is input to the accumulating circuit 252. The signal P_RES becomes the high level at the start of one main frame, whereby the count value held in the accumulating circuit 252 is reset. Based on the signal P_DECI_CLK2, the accumulating circuit 252 can perform accumulation in which incidence of one photon is weighted by a weighting amount different from that of the accumulating circuit 251.

As described above, in the present embodiment, the accumulating circuit 251 and the accumulating circuit 252 are arranged in one pixel 200, and one pixel 200 can generate two count values to which two kinds of weighting are applied.

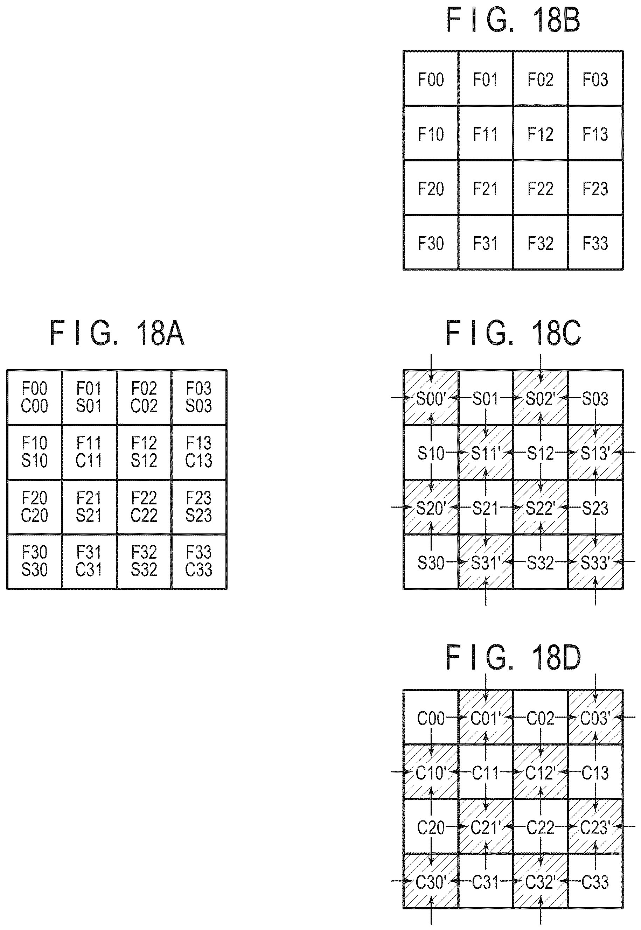

Figs. 18A to 18D are diagrams illustrating interpolation processing in the interpolation unit 401 according to the present embodiment. Fig. 18A illustrates an arrangement of pixel values similar to Fig. 9A. Unlike Fig. 9A, all of the 16 pixels 200 in the range of the zeroth row to the third row and the zeroth column to the third column generate the normal pixel values F00 to F33. In addition, pixels that generate sine pixel values S01, S03, S10, S12, S21, S23, S30, and S32 and pixels that generate cosine pixel values C00, C02, C11, C13, C20, C22, C31, and C33 are arranged in a checkered pattern. As in the second embodiment, the interpolation unit 401 sets positions of all pixels as pixel centroids. The interpolation unit 401 calculates pixel values that do not exist at the pixel centroids by linear interpolation.

Fig. 18B illustrates the normal pixel values F00 to F33. Since the normal pixel values F00 to F33 already exist at the pixel centroids, interpolation processing is not performed on the normal pixel values.

Fig. 18C illustrates an example in which sine pixel values S00', S02', S11', S13', S20', S22', S31', and S33' are calculated by interpolation processing using linear interpolation. Since there are no sine pixel values at these coordinates, interpolation processing by linear interpolation is performed. As illustrated in Fig. 18C, four sine pixel values existing in the vertical and horizontal directions are used for linear interpolation of each of the sine pixel values S00', S02', S11', S13', S20', S22', S31', and S33'.

For example, the sine pixel value S11' is calculated by linear interpolation using the sine pixel values S01, S10, S12, and S21. The following Expression (36) is an expression for calculating the sine pixel value S11'.

$$S11' = \frac{S01 + S10 + S12 + S21}{4} \qquad (36)$$

Fig. 18D illustrates an example in which cosine pixel values C01', C03', C10', C12', C21', C23', C30', and C32' are calculated by interpolation processing using linear interpolation. Since there are no cosine pixel values at these coordinates, interpolation processing by linear interpolation is performed. As illustrated in Fig. 18D, four cosine pixel values existing in the vertical and horizontal directions are used for linear interpolation of each of the cosine pixel values C01', C03', C10', C12', C21', C23', C30', and C32'.

For example, the cosine pixel value C21' is calculated by linear interpolation using the cosine pixel values C11, C20, C22, and C31. The following Expression (37) is an expression for calculating the cosine pixel value C21'.

$$C21' = \frac{C11 + C20 + C22 + C31}{4} \qquad (37)$$

By the above interpolation method, the normal pixel values of four rows and four columns, the sine pixel values of four rows and four columns, and the cosine pixel values of four rows and four columns are generated using the two types of pixel values arranged in four rows and four columns, and output to the arithmetic unit 402. Therefore, the spatial resolution is not changed by the interpolation processing.

As described above, also in the present embodiment, as in the first to third embodiments, the coordinates and the number of pixel values of each type can be matched by interpolation processing. Therefore, a photoelectric conversion device capable of acquiring a signal with higher accuracy is provided. Further, as in the second embodiment, since the spatial resolution does not change by the interpolation processing in the present embodiment, a signal having a higher spatial resolution than that in the first embodiment can be acquired.

In the example described above, the case where the pixels 200 that output the normal pixel value and the sine pixel value and the pixels 200 that output the normal pixel value and the cosine pixel value are arranged is illustrated, but the combination of the types of pixel values output from the pixels 200 is not limited thereto. For example, a pixel arrangement in which pixels 200 that output sine pixel values and normal pixel values and pixels 200 that output sine pixel values and cosine pixel values are arranged may be employed. Alternatively, a pixel arrangement in which some pixels 200 output one type of pixel value and the other pixels 200 output two types of pixel values may be employed. Also in these cases, similar pixel values can be obtained by calculating pixel values that do not exist at the pixel centroids by linear interpolation.

In addition, in the pixel configuration of Fig. 17, a correction method in which the coordinates of any of the pixels 200 in two rows and two columns are set as the pixel centroid as in the first embodiment may be performed. In addition, as in the third embodiment, a correction method in which the coordinates of the center of the pixels 200 in two rows and two columns are set as the pixel centroid may be performed.

Fifth Embodiment

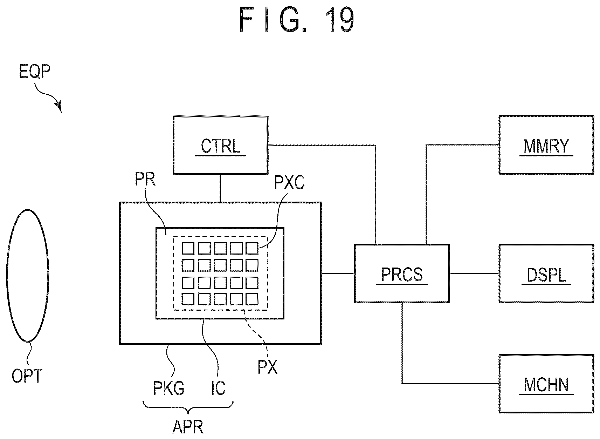

Equipment according to a fifth embodiment will be described with reference to Fig. 19. Fig. 19 is a block diagram illustrating a schematic configuration of equipment according to the present embodiment.

Fig. 19 is a schematic diagram illustrating equipment EQP including a photoelectric conversion device APR. The photoelectric conversion device APR has the function of the photoelectric conversion device 100 according to the first to fourth embodiments. All or part of the photoelectric conversion device APR is a semiconductor device IC. The photoelectric conversion device APR of this example can be used as, for example, an image sensor, an auto focus (AF) sensor, a photometric sensor, a ranging sensor, or the like. The semiconductor device IC has a pixel area PX in which pixel circuits PXC each including photoelectric conversion unit are arranged in a matrix. The semiconductor device IC may have a peripheral area PR around the pixel area PX. Circuits other than the pixel circuits can be arranged in the peripheral area PR.

The photoelectric conversion device APR may have a structure (stacked chips structure) in which a first semiconductor chip provided with a plurality of photoelectric conversion units and a second semiconductor chip provided with a peripheral circuit are stacked. Each of the peripheral circuits in the second semiconductor chip may be a column circuit corresponding to a pixel column of the first semiconductor chip. Each of the peripheral circuits in the second semiconductor chip may be a matrix circuit corresponding to a pixel or a pixel block in the first semiconductor chip. For the connection between the first semiconductor chip and the second semiconductor chip, a through electrode (TSV), an interchip wiring by direct bonding of a conductor such as copper, a connection by a micro bump between chips, a connection by wire bonding, or the like can be employed.

The photoelectric conversion device APR may include a package PKG for mounting the semiconductor device IC in addition to the semiconductor device IC. The package PKG may include a base body to which the semiconductor device IC is fixed, a lid such as glass facing the semiconductor device IC, and a connection member such as a bonding wire or a bump for connecting a terminal provided on the base body and a terminal provided on the semiconductor device IC.

The equipment EQP may further include at least one of an optical device OPT, a control device CTRL, a processing device PRCS, a display device DSPL, a storage device MMRY, and a mechanical device MCHN. The optical device OPT corresponds to the photoelectric conversion device APR, and is, for example, a lens, a shutter, or a mirror. The control device CTRL controls the photoelectric conversion device APR, and is, for example, a semiconductor device such as an ASIC.

The processing device PRCS processes a signal output from the photoelectric conversion device APR, and constitutes an analog front end (AFE) or a digital front end (DFE). The processing device PRCS is a semiconductor device such as a central processing unit (CPU) or an application specific integrated circuit (ASIC). The display device DSPL is an EL display device, a liquid crystal display device, or the like that displays information (image) obtained by the photoelectric conversion device APR. The storage device MMRY is a magnetic device, a semiconductor device, or the like that stores information (image) obtained by the photoelectric conversion device APR. The storage device MMRY is a volatile memory such as an SRAM or a DRAM, or a nonvolatile memory such as a flash memory or a hard disk drive.

In addition, the processing device PRCS may acquire the optical flow using the signals output from the photoelectric conversion devices 100 according to the first to fourth embodiments. For example, the processing device PRCS may generate a weighted correlation image based on a sine function, a weighted correlation image based on a cosine function, and a normal image, and acquire an optical flow from these three images.

The mechanical device MCHN includes a movable portion or a propulsion portion such as a motor or an engine. In the equipment EQP, a signal output from the photoelectric conversion device APR is displayed on the display device DSPL or transmitted to the outside by a communication device (not illustrated) included in the equipment EQP. Therefore, it is preferable that the equipment EQP further include a storage device MMRY and a processing device PRCS separately from the storage circuit unit and the arithmetic circuit unit included in the photoelectric conversion device APR. The mechanical device MCHN may be controlled based on a signal output from the photoelectric conversion device APR.

The equipment EQP illustrated in Fig. 19 may be an electronic device such as an information terminal (for example, a smartphone and a wearable terminal) having a photographing function, a camera (for example, an interchangeable lens camera, a compact camera, a video camera, and a surveillance camera), or the like. The mechanical device MCHN in the camera may drive parts of the optical device OPT for zooming, focusing, and shutter operation. Also, the equipment EQP may be a transport device (movable body) such as a vehicle, a ship, a drone, or an airplane. The equipment EQP may be a medical device such as an endoscope or a CT scanner. The equipment EQP may be a measurement device such as a ranging sensor, an analysis device such as an electron microscope, an office device such as a copier, or an industrial device such as a robot.

The mechanical device MCHN in the transport device may be used as a movable device. The equipment EQP as a transport device is suitable for transporting the photoelectric conversion device APR, or for assisting and/or automating driving (manipulation) by an imaging function. The processing device PRCS for assisting and/or automating driving (manipulation) may perform processing for operating the mechanical device MCHN as a movable device based on information obtained by the photoelectric conversion device APR.

According to the first to fourth embodiments, signal acquisition can be performed satisfactorily. Therefore, the photoelectric conversion device APR according to the first to fourth embodiments may provide a high value to a designer, a manufacturer, a seller, a purchaser, and/or a user thereof. Therefore, when the photoelectric conversion device APR is mounted on the equipment EQP, the value of the equipment EQP may also be increased. Therefore, in manufacturing and selling the equipment EQP, it is advantageous to determine the mounting of the photoelectric conversion device APR of the present embodiment on the equipment EQP in order to increase the value of the equipment EQP. Here, increasing the value corresponds to at least one of adding a function, improving performance, improving characteristics, improving reliability, improving manufacturing yield, reducing environmental load, reducing cost, reducing size, and reducing weight.

For example, by mounting the photoelectric conversion device APR in a transport device, it is possible to obtain excellent performance when photographing outside the transport device or measuring an external environment. Therefore, in manufacturing and selling the transport device, it is advantageous to determine the mounting of the photoelectric conversion device APR according to the present embodiment on the transport device in order to improve the performance of the transport device itself. In particular, the photoelectric conversion device APR is suitable for a transport device that performs driving support and/or automatic driving of the transport device using information obtained by the photoelectric conversion device APR.

Sixth Embodiment

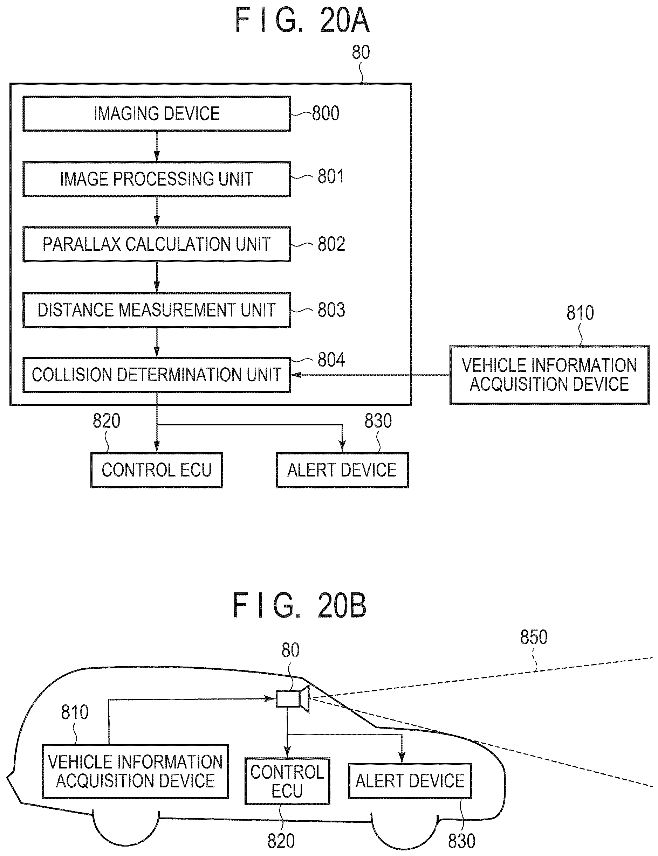

Figs. 20A and 20B are block diagrams of equipment relating to the vehicle-mounted camera according to the present embodiment. Figs. 20A and 20B illustrate an example in which the above-described photoelectric conversion device is applied to a movable body such as a vehicle. The equipment 80 includes an imaging device 800 (an example of the photoelectric conversion device) and a signal processing device (processing device) that processes a signal from the imaging device 800. The equipment 80 includes an image processing unit 801 that performs image processing on a plurality of pieces of image data acquired by the imaging device 800, and a parallax calculation unit 802 that calculates parallax (phase difference of parallax images) from the plurality of pieces of image data acquired by the equipment 80.

Here, the equipment 80 may include an optical system (not illustrated) that guides light to the imaging device 800. The optical system may include, for example, a lens, a shutter, and a mirror. A plurality of photoelectric conversion units substantially conjugate to the pupil of the optical system may be arranged in a pixel included in the imaging device 800. For example, a plurality of photoelectric conversion units are arranged corresponding to one microlens. The plurality of photoelectric conversion units may receive light fluxes transmitted through different positions of the pupil of the optical system. Thus, the imaging device 800 outputs a plurality of pieces of image data respectively corresponding to the light fluxes transmitted through different positions of the pupil of the optical system. Then, the parallax calculation unit 802 may calculate the parallax using the plurality of pieces of image data being output.

The equipment 80 includes a distance measurement unit 803 that calculates a distance to an object based on the calculated parallax, and a collision determination unit 804 that determines whether or not there is a possibility of collision based on the calculated distance. Here, the parallax calculation unit 802 and the distance measurement unit 803 are examples of a distance information acquisition unit that acquires distance information to the object. That is, the distance information is information on a parallax, a defocus amount, a distance to the object, and the like. The collision determination unit 804 may determine the possibility of collision using any of these pieces of distance information. Note that the distance information may be acquired using a time of flight (ToF) technique. The distance information acquisition unit may be realized by dedicatedly designed hardware or software modules. Further, it may be realized by a field programmable gate array (FPGA), an application specific integrated circuit (ASIC) or a combination thereof.

The equipment 80 is connected to the vehicle information acquisition device 810, and can obtain vehicle information such as a vehicle speed, a yaw rate, and a steering angle. Further, the equipment 80 is connected to a control ECU 820 which is a control device that outputs a control signal for generating a braking force to the vehicle based on the determination result of the collision determination unit 804. The equipment 80 is also connected to an alert device 830 that issues an alert to the driver based on the determination result of the collision determination unit 804. For example, when the collision possibility is high as the determination result of the collision determination unit 804, the control ECU 820 performs vehicle control to avoid collision or reduce damage by braking, returning an accelerator, suppressing engine output, or the like. The alert device 830 alerts the user by sounding an alarm such as a sound, displaying alert information on a screen of a car navigation system or the like, or giving vibration to a seat belt or a steering wheel. The equipment 80 functions as a control unit that controls the operation of controlling the vehicle as described above.

In the present embodiment, an image of the periphery of the vehicle, for example, the front or the rear is captured by the equipment 80. Fig. 20B illustrates equipment in a case where an image is captured in front of the vehicle (image capturing range 850). The vehicle information acquisition device 810 as the imaging control unit sends an instruction to the equipment 80 or the imaging device 800 to perform the imaging operation. With such a configuration, the accuracy of distance measurement can be further improved.

Although the example of control for avoiding a collision to another vehicle has been described above, the embodiment is applicable to automatic driving control for following another vehicle, automatic driving control for not going out of a traffic lane, or the like. Furthermore, the equipment is not limited to a vehicle such as an automobile and can be applied to a movable body (movable apparatus) such as a ship, an airplane, a satellite, an industrial robot and a consumer use robot, or the like, for example. In addition, the equipment can be widely applied to equipment which utilizes object recognition or biometric authentication, such as an intelligent transportation system (ITS), a surveillance system, or the like without being limited to movable bodies.

Other Embodiments

The present disclosure is not limited to the above embodiments, and various modifications are possible. For example, an example in which some of the configurations of any one of the embodiments are added to other embodiments or an example in which some of the configurations of any one of the embodiments are replaced with some of the configurations of other embodiments are also embodiments of the present disclosure.

The embodiments described above can be appropriately modified without departing from the technical idea. Note that the disclosure of the present specification includes not only the matters described in the present specification but also all matters that can be grasped from the present specification and the drawings attached to the present specification. Also, the disclosure of the present specification includes a complementary set of the concepts described in the present specification. In other words, for example, when there is a description of "A is greater than B" in the present specification, it can be said that the description of "A is not greater than B" is disclosed in the present specification even when the description of "A is not greater than B" is omitted. This is because it is assumed that the case where "A is not greater than B" is considered when "A is greater than B" is described.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

It should be noted that the above-described embodiments are merely specific examples for carrying out the present disclosure, and the technical scope of the present disclosure should not be interpreted in a limited manner by these embodiments. That is, the present disclosure can be implemented in various forms without departing from the technical idea or the main features thereof.

Various embodiments have been described in detail above but it will be understood that the present disclosure is not limited to these embodiments and encompasses all modifications, variants, alternatives and equivalents falling within the scope of the appended claims.

## Claims

1. A photoelectric conversion device (100) comprising:

   a plurality of avalanche photodiodes (201) arranged two-dimensionally;
   a plurality of accumulating circuits (251) arranged so as to correspond to the plurality of avalanche photodiodes (201); and
   an interpolation unit (401) configured to perform interpolation processing using pixel values generated in each of the plurality of accumulating circuits (251),
   wherein the plurality of accumulating circuits (251) include a plurality of first accumulating circuits respectively configured to receive output signals based on incident light to a plurality of first avalanche photodiodes among the plurality of avalanche photodiodes (201), and a plurality of second accumulating circuits respectively configured to receive output signals based on incident light to a plurality of second avalanche photodiodes among the plurality of avalanche photodiodes (201),
   wherein the plurality of first accumulating circuits generate, based on output signals of the plurality of first avalanche photodiodes, a plurality of first pixel values by accumulating values weighted by a first weight that varies in a predetermined cycle,
   wherein the plurality of second accumulating circuits generate, based on output signals of the plurality of second avalanche photodiodes, a plurality of second pixel values by accumulating values weighted by a second weight that has values different from the first weight and that varies in a predetermined cycle, and
   wherein the interpolation unit (401) generates, by interpolation processing using a part of the plurality of first pixel values, a first interpolation pixel value at first representative coordinates of a first avalanche photodiode corresponding to a first pixel value used in the interpolation processing.

2. The photoelectric conversion device according to claim 1, wherein the first representative coordinates are different from any coordinates of the plurality of first avalanche photodiodes.

3. The photoelectric conversion device according to claim 1 or 2, wherein the first representative coordinates are coordinates of any of the plurality of second avalanche photodiodes.

4. The photoelectric conversion device according to claim 1 or 2, wherein the first representative coordinates are different from any coordinates of the plurality of avalanche photodiodes.

5. The photoelectric conversion device according to claim 1, wherein when a first pixel value based on an output signal of a first avalanche photodiode at coordinates that coincide with the first representative coordinates exists in the plurality of first pixel values, the interpolation unit outputs the first pixel value based on the output signal of the first avalanche photodiode at the coordinates that coincide with the first representative coordinates, as the first interpolation pixel value as it is.

6. The photoelectric conversion device according to any one of claims 1 to 5, the interpolation unit generates, by interpolation processing using a part of the plurality of second pixel values, a second interpolation pixel value at second representative coordinates of a second avalanche photodiode corresponding to a second pixel value used in the interpolation processing.

7. The photoelectric conversion device according to claim 1,

   wherein the plurality of avalanche photodiodes form a repetitive arrangement in which four avalanche photodiodes are arranged in two rows and two columns as one unit, and
   wherein the four avalanche photodiodes include the first avalanche photodiode and the second avalanche photodiode.

8. The photoelectric conversion device according to claim 7, wherein the first representative coordinates are coordinates of any of three avalanche photodiodes excluding the first avalanche photodiode.

9. The photoelectric conversion device according to claim 7 or 8, wherein the interpolation unit generates the first interpolation pixel value by calculating an average value of first pixel values based on output signals of a plurality of first avalanche photodiodes adjacent to an avalanche photodiode at the first representative coordinates.

10. The photoelectric conversion device according to claim 7, wherein the first representative coordinates are coordinates of a center of the four avalanche photodiodes.

11. The photoelectric conversion device according to any one of claims 1 to 10,

   wherein the plurality of accumulating circuits further include a plurality of third accumulating circuits respectively configured to receive output signals based on incident light to a plurality of third avalanche photodiodes among the plurality of avalanche photodiodes,
   wherein the plurality of third accumulating circuits generate, based on output signals of the plurality of third avalanche photodiodes, a plurality of third pixel values by accumulating values that are not weighted by a time-varying weight, and
   wherein the interpolation unit generates, by interpolation processing using a part of the plurality of third pixel values, a third interpolation pixel value at third representative coordinates of a third avalanche photodiode corresponding to a third pixel value used in the interpolation processing.

12. The photoelectric conversion device according to claim 11 further comprising:

   an arithmetic unit configured to calculate an optical flow based on at least the first interpolation pixel value and one of the plurality of second pixel values; and
   a selection unit to which the plurality of second pixel values, the third interpolation pixel value, and the optical flow are input, the selection unit being configured to select a signal to be output based on a value of the optical flow, wherein the selection unit outputs the third interpolation pixel value as a pixel value for image generation when the value of the optical flow is greater than a threshold value, and outputs one second pixel value corresponding to the third representative coordinates among the plurality of second pixel values as the pixel value for image generation when the value of the optical flow is equal to or less than the threshold value.

13. The photoelectric conversion device according to any one of claims 1 to 10,

   wherein the plurality of accumulating circuits further include a plurality of fourth accumulating circuits respectively configured to receive signals based on incident light to the plurality of first avalanche photodiodes, and
   wherein the plurality of fourth accumulating circuits generate, based on output signals of the plurality of first avalanche photodiodes, a plurality of third pixel values by accumulating values that are not weighted by a time-varying weight.

14. The photoelectric conversion device according to any one of claims 1 to 13, wherein the first weight has a value that varies with time based on a sine function or a cosine function, and the second weight has a value that varies with time based on a sine function or a cosine function with a phase different from that of the first weight.

15. Equipment comprising:

the photoelectric conversion device according to any one of claims 1 to 14; and
at least any one of:

an optical device adapted for the photoelectric conversion device,
a control device configured to control the photoelectric conversion device,
a processing device configured to process a signal output from the photoelectric conversion device,
a display device configured to display information obtained by the photoelectric conversion device,
a storage device configured to store information obtained by the photoelectric conversion device, and
a mechanical device configured to operate based on information obtained by the photoelectric conversion device.

FIG. 1

101
11
12

100

103
21
22
23

FIG. 2

11

12

102
101

F I G. 3

# FIG. 4

WEIGHTING AMOUNT

TIME

SUB-FRAME PERIOD

MAIN FRAME PERIOD

# FIG. 5

11 ← → 21

103

VH

202

210

211

201

102

VL

113

213

214

212

F I G. 6A

VH

202

210

node A ○ node B

201

VL

F I G. 6B

PHOTON INCIDENCE

POTENTIAL
OF node A

DETERMINATION
THRESHOLD VALUE

TIME

t0          t1  t2                    t3

F I G. 6C

POTENTIAL
OF node B

TIME

# FIG. 7

F I G. 8

EP 4 783 604 A1

# FIG. 9B

| F00 | | F02 | |
|-----|-----|-----|-----|
| | F11 | | F13 |
| F20 | | F22 | |
| | F31 | | F33 |

# FIG. 9A

| F00 | S01 | F02 | S03 |
|-----|-----|-----|-----|
| C10 | F11 | C12 | F13 |
| F20 | S21 | F22 | S23 |
| C30 | F31 | C32 | F33 |

# FIG. 9C

| | S01 | | S03 |
|-----|-----|-----|-----|
| | | | |
| | S21 | | S23 |
| | | | |

# FIG. 9D

| | | | |
|-----|-----|-----|-----|
| C10 | | C12 | |
| | | | |
| C30 | | C32 | |

FIG. 10B

| | | | |
|---|---|---|---|
| F00 | F01' | F02 | F03' |
| | F11 | | F13 |
| F20 | F21' | F22 | F23' |
| | F31 | | F33 |

FIG. 10A

| F00 | S01 | F02 | S03 |
|---|---|---|---|
| C10 | F11 | C12 | F13 |
| F20 | S21 | F22 | S23 |
| C30 | F31 | C32 | F33 |

FIG. 10C

| | S01 | | S03 |
|---|---|---|---|
| | | | |
| | S21 | | S23 |
| | | | |

FIG. 10D

| | | | |
|---|---|---|---|
| | C01' | | C03' |
| C10 | | C12 | |
| | C21' | | C23' |
| C30 | | C32 | |

FIG. 11A

| | |
|---|---|
| F01' | F03' |
| F21' | F23' |

FIG. 11B

| | |
|---|---|
| S01 | S03 |
| S21 | S23 |

FIG. 11D

| | |
|---|---|
| F01' | F03'<br>=S03 |
| F21' | F23'<br>=S23 |

FIG. 11C

| | |
|---|---|
| OF01 | OF03<br>=0 |
| OF21 | OF23<br>=0 |

F I G. 12A

F I G. 12B

F I G. 12C

FIG. 13B

| | | | |
|---|---|---|---|
| F00 | | F02 | |
| F10' | F11 | F12' | F13 |
| F20 | | F22 | |
| F30' | F31 | F32' | F33 |

FIG. 13A

| F00 | S01 | F02 | S03 |
|-----|-----|-----|-----|
| C10 | F11 | C12 | F13 |
| F20 | S21 | F22 | S23 |
| C30 | F31 | C32 | F33 |

FIG. 13C

| | S01 | | S03 |
|---|---|---|---|
| S10' | | S12' | |
| | S21 | | S23 |
| S30' | | S32' | |

FIG. 13D

| | | | |
|---|---|---|---|
| C10 | | C12 | |
| | | | |
| C30 | | C32 | |

F I G. 14B

| | | | |
|---|---|---|---|
| F00 | F01' | F02 | F03' |
| F10' | F11 | F12' | F13 |
| F20 | F21' | F22 | F23' |
| F30' | F31 | F32' | F33 |

F I G. 14A

| | | | |
|---|---|---|---|
| F00 | S01 | F02 | S03 |
| C10 | F11 | C12 | F13 |
| F20 | S21 | F22 | S23 |
| C30 | F31 | C32 | F33 |

F I G. 14C

| | | | |
|---|---|---|---|
| S00' | S01 | S02' | S03 |
| S10' | S11' | S12' | S13' |
| S20' | S21 | S22' | S23 |
| S30' | S31' | S32' | S33' |

F I G. 14D

| | | | |
|---|---|---|---|
| C00' | C01' | C02' | C03' |
| C10 | C11' | C12 | C13' |
| C20' | C21' | C22' | C23' |
| C30 | C31' | C32 | C33' |

# FIG. 15B

| F00 | F01' | F02' | F03 | F04' | F05' |
|---|---|---|---|---|---|

| F10' | F11' | F12 | F13' | F14' | F15 |
|---|---|---|---|---|---|

| F20 | F21' | F22' | F23 | F24' | F25' |
|---|---|---|---|---|---|

| F30' | F31' | F32 | F33 | F34' | F35 |
|---|---|---|---|---|---|

# FIG. 15A

| F00 | S01 | C02 | F03 | S04 | C05 |
|---|---|---|---|---|---|
| S10 | C11 | F12 | S13 | C14 | F15 |
| F20 | S21 | C22 | F23 | S24 | C25 |
| S30 | C31 | F32 | S33 | C34 | F35 |

# FIG. 15C

| S00' | S01 | S02' | S03' | S04 | S05' |
|---|---|---|---|---|---|

| S10 | S11' | S12' | S13 | S14' | S15' |
|---|---|---|---|---|---|

| S20' | S21 | S22' | S23' | S24 | S25' |
|---|---|---|---|---|---|

| S30 | S31' | S32' | S33 | S34' | S35' |
|---|---|---|---|---|---|

# FIG. 15D

| C00' | C01' | C02 | C03' | C04' | C05 |
|---|---|---|---|---|---|

| C10' | C11 | C12' | C13' | C14 | C15' |
|---|---|---|---|---|---|

| C20' | C21' | C22 | C23' | C24' | C25 |
|---|---|---|---|---|---|

| C30' | C31 | C32' | C33' | C34 | C35' |
|---|---|---|---|---|---|

FIG. 16B

FIG. 16A

FIG. 16C

FIG. 16D

# FIG. 17

EP 4 783 604 A1

F I G. 18B

| F00 | F01 | F02 | F03 |
|-----|-----|-----|-----|
| F10 | F11 | F12 | F13 |
| F20 | F21 | F22 | F23 |
| F30 | F31 | F32 | F33 |

F I G. 18A

| F00 C00 | F01 S01 | F02 C02 | F03 S03 |
|---------|---------|---------|---------|
| F10 S10 | F11 C11 | F12 S12 | F13 C13 |
| F20 C20 | F21 S21 | F22 C22 | F23 S23 |
| F30 S30 | F31 C31 | F32 S32 | F33 C33 |

F I G. 18C

| S00' | S01 | S02' | S03 |
|------|-----|------|-----|
| S10 | S11' | S12 | S13' |
| S20' | S21 | S22' | S23 |
| S30 | S31' | S32 | S33' |

F I G. 18D

| C00 | C01' | C02 | C03' |
|-----|------|-----|------|
| C10' | C11 | C12' | C13 |
| C20 | C21' | C22 | C23' |
| C30' | C31 | C32' | C33 |

# F I G. 19

# F I G. 20A

80

IMAGING DEVICE ~800

↓

IMAGE PROCESSING UNIT ~801

↓

PARALLAX CALCULATION UNIT ~802

↓

DISTANCE MEASUREMENT UNIT ~803

↓

COLLISION DETERMINATION UNIT ~804

810

VEHICLE INFORMATION ACQUISITION DEVICE

820

CONTROL ECU

830

ALERT DEVICE

# F I G. 20B

850

80

810

VEHICLE INFORMATION ACQUISITION DEVICE

CONTROL ECU

ALERT DEVICE

820

830

Europäisches Patentamt

European Patent Office

Office européen des brevets

# EUROPEAN SEARCH REPORT

**Application Number**

EP 26 15 2081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/288077 A1 (NEGISHI NORIO [JP]) 10 September 2020 (2020-09-10) | 1-6 | INV. H04N25/773 |
| Y | * the whole document * | 1-15 | |
| Y | US 2019/288150 A1 (MIYAMOTO YOSHIAKI [JP] ET AL) 19 September 2019 (2019-09-19) * paragraph [0009]; figure 1 * | 1-15 | |
| Y | JP 2013 251680 A (JVC KENWOOD CORP) 12 December 2013 (2013-12-12) * column 33; figure 2 * * paragraph [0039]; figure 4 * * paragraph [0045]; figure 6 * * figure 10 * | 8-15 | |
| Y | US 2007/159544 A1 (HU SHANE C [US]) 12 July 2007 (2007-07-12) * paragraph [0115] * * paragraphs [0145] - [0148]; figures 14A, 14B * | 12,14,15 | |
| A | US 2022/201182 A1 (MAEKAWA SHINTARO [JP]) 23 June 2022 (2022-06-23) * the whole document * | 1-15 | **TECHNICAL FIELDS SEARCHED (IPC)** H04N G01J |

The present search report has been drawn up for all claims

| Place of search | Date of completion of the search | Examiner |
|---|---|---|
| Munich | 13 May 2026 | Moorhouse, David |

EPO FORM 1503 03.82 (P04C01)

## ANNEX TO THE EUROPEAN SEARCH REPORT
## ON EUROPEAN PATENT APPLICATION NO.

EP 26 15 2081

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2026

| Patent document cited in search report | Publication date | Patent family member(s) | Publication date |
|---|---|---|---|
| US 2020288077 A1 | 10-09-2020 | JP 6949067 B2 | 13-10-2021 |
| | | JP 2020145554 A | 10-09-2020 |
| | | US 2020288077 A1 | 10-09-2020 |
| US 2019288150 A1 | 19-09-2019 | JP 7169751 B2 | 11-11-2022 |
| | | JP 2019161551 A | 19-09-2019 |
| | | US 2019288150 A1 | 19-09-2019 |
| JP 2013251680 A | 12-12-2013 | NONE | |
| US 2007159544 A1 | 12-07-2007 | CN 101366288 A | 11-02-2009 |
| | | EP 1974549 A2 | 01-10-2008 |
| | | JP 2009524282 A | 25-06-2009 |
| | | KR 20080083712 A | 18-09-2008 |
| | | TW 200822763 A | 16-05-2008 |
| | | US 2007159544 A1 | 12-07-2007 |
| | | WO 2007087119 A2 | 02-08-2007 |
| US 2022201182 A1 | 23-06-2022 | JP 7630985 B2 | 18-02-2025 |
| | | JP 2022096472 A | 29-06-2022 |
| | | US 2022201182 A1 | 23-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHIGERU ANDO** ; **AKIRA KIMACHI**. Time-Domain Correlation Imaging and Its Applications. *the transactions of the Institute of Electrical Engineers of Japan*

- Time-Domain Correlation Imaging and Its Applications. *Sensors and Micromachines Society*, 01 May 2009, vol. 129 (5), 129-137